# EUROPEAN PATENT APPLICATION

(11) **EP 4 826 415 A2**
(43) Date of publication of application: **21.10.2026**
(21) Application number: 26184024.3
(22) Date of filing: 21.04.2022
(51) Int. Cl.: G01S 17/931

(54) **DETECTION APPARATUS, RADAR, AND TERMINAL**

(30) Priority: 07.05.2021 CN 202110496273
(62) Document number(s) of the earlier application(s) in accordance with Art. 76 EPC: 22798579.3 / 4 336 209
(71) Applicant: Yinwang Intelligent Technologies Co., Ltd., Shenzhen, Guangdong 518110 (CN)
(72) Inventor: YANG, Guangyao, Shenzhen, 518129 (CN); HU, Xuan, Shenzhen, 518129 (CN); SHI, Xianling, Shenzhen, 518129 (CN); HUANG, Zhizhen, Shenzhen, 518129 (CN)
(74) Representative: Pfenning, Meinig & Partner mbB

(57) **Abstract**

A detection apparatus, a radar, and a terminal are provided, and relate to the field of sensor technologies. The detection apparatus includes: a transceiver (101), configured to transmit a first signal (E1), where the first signal (E1) includes a double-sideband signal, and configured to receive a second signal (E2), where the second signal (E2) is a reflected signal corresponding to the first signal (E1); a coupler (102), configured to: receive a local oscillation signal (E_{LO}) and the second signal (E2), and output at least three output signals (C1, C2, and C3), where the local oscillation signal (E_{LO}) and the first signal (E1) are obtained by splitting a third signal (E3) from a modulator (104); and a processor (103), configured to obtain a detection result based on the at least three output signals (C1, C2, and C3). Hardware costs of the detection apparatus can be reduced. The detection apparatus is applied to a radar system, and the radar system is further applied to the terminal, so that hardware costs of the radar system and the terminal can be reduced while detection precision is ensured.

## Description

This application claims priority to Chinese Patent Application No. 202110496273.X, filed with the China National Intellectual Property Administration on May 7, 2021 and entitled "DETECTION APPARATUS, RADAR, AND TERMINAL", which is incorporated herein by reference in its entirety.

### TECHNICAL FIELD

This application relates to the field of sensor technologies, and in particular, to a detection apparatus, a radar, and a terminal.

### BACKGROUND

With development of society, intelligent terminals such as an intelligent transportation device, a smart home device, and a robot are gradually entering people's daily life. Sensors play an important role in the intelligent terminals. Various sensors installed on the intelligent terminal, such as a millimeter-wave radar, a lidar, a camera, and an ultrasonic radar, sense a surrounding environment in a moving process of the intelligent terminal, collect data, and detect distance information and speed information of a target object. The sensors may sense a potential risk in advance and provide assistance or even autonomously take a necessary avoidance measure. This effectively improves security and comfort of the intelligent terminal.

In a related technical standard of an automatic driving system used by a terminal such as a vehicle or an unmanned aerial vehicle, the automatic driving system may be classified into six levels L0 to L5 based on a proportion of driving operations that can be independently completed by the system to all driving operations. In an advanced driver assistance system (advanced driver assistance system, ADAS) at L3 and above, detection of an external environment is usually completed by using a lidar (light detection and ranging, LiDAR) system. A current lidar implements distance measurement mostly based on a time of flight (time of flight, ToF) technology. However, in the time of flight technology, larger transmission pulse power indicates a larger distance measurement range, and a narrower transmission pulse width indicates higher distance measurement precision. However, it is very difficult to increase the pulse power and reduce the pulse width at the same time. This restricts further improvement of radar performance based on the time of flight technology.

Therefore, a frequency-modulated continuous wave (frequency-modulated continuous wave, FMCW) technology is proposed, and a scheme for improving performance of the lidar based on the frequency modulated continuous wave technology is proposed. However, a low-cost radar system cannot be implemented in a conventional technology.

### SUMMARY

In view of this, a detection apparatus, a radar, and a terminal are proposed. The detection apparatus according to this application can reduce hardware costs of the detection apparatus. When the detection apparatus is applied to a radar system and the radar system is further applied to the terminal, hardware costs of the radar system and the terminal can be reduced.

According to a first aspect, an embodiment of this application provides a detection apparatus. The apparatus includes:
a transceiver, configured to transmit a first signal, where the first signal includes a double-sideband signal, and configured to receive a second signal, wherein the second signal is a reflected signal corresponding to the first signal;
a coupler, configured to: receive a local oscillation signal and the second signal, and output at least three output signals, where the local oscillation signal and the first signal are obtained by splitting a third signal from a modulator; and
a processor, configured to obtain a detection result based on the at least three output signals.

According to the detection apparatus in this embodiment of this application, the transceiver may transmit the double-sideband first signal, and may receive the second signal obtained by reflecting the first signal at a target location. The coupler may receive the local oscillation signal and the second signal, and the local oscillation signal is obtained by splitting the third signal from the modulator, so that the local oscillation signal and the first signal include same information. Mixing detection is performed on the local oscillation signal and the second signal to obtain the at least three output signals. The processor processes the at least three output signals, to obtain the detection result with high accuracy. Because costs of the coupler that outputs the at least three output signals are low, hardware costs of the detection apparatus can be reduced. When the detection apparatus is applied to a radar system and the radar system is further applied to a terminal, hardware costs of the radar system and the terminal can be reduced.

According to the first aspect, in a first possible implementation of the detection apparatus, the coupler includes an optical fiber coupler having at least three input ends and at least three output ends, and two of the at least three input ends are configured to receive the local oscillation signal and the second signal.

By using the optical fiber coupler having the at least three input ends and the at least three output ends, the hardware costs of the detection apparatus can be reduced.

According to the first aspect or the first possible implementation of the first aspect, in a second possible implementation of the detection apparatus, the at least three output signals include a first output signal, a second output signal, and a third output signal; a phase difference between the first output signal and the second output signal is a first phase difference, a phase difference between the second output signal and the third output signal is a second phase difference, and a phase difference between the first output signal and the third output signal is a third phase difference; and the first phase difference, the second phase difference, and the third phase difference are greater than or equal to 30 degrees and less than or equal to 150 degrees.

In this manner, three output signals having specific phase differences may be obtained, so that the processor can complete quadrature demodulation of the three output signals based on the phase differences of the three output signals, thereby implementing conversion from a real signal to a complex signal.

According to the first aspect or any one of the foregoing possible implementations of the first aspect, in a third possible implementation of the detection apparatus, the obtaining a detection result based on the at least three output signals includes:
processing the at least three output signals to remove a direct current signal from each output signal, to obtain at least three processed output signals; and
performing quadrature demodulation on the at least three processed output signals to obtain the detection result.

The at least three output signals are processed to remove the direct current signal in each output signal, so that the three processed output signals whose impact of a common mode non-beat-frequency term noise in the output signal is removed can be obtained, so that the finally obtained detection result is not interfered by the common mode non-beat-frequency term noise.

According to the third possible implementation of the first aspect, in a fourth possible implementation of the detection apparatus, the detection result includes distance information of a to-be-measured target; and the performing quadrature demodulation on the at least three processed output signals to obtain the detection result includes:
determining distance information of a same target based on an autocorrelation operation result of a signal obtained by adding a positive sideband signal and a negative sideband signal corresponding to the same target, where the positive sideband signal and the negative sideband signal are obtained through quadrature demodulation.

In this manner, the distance information of the target may be obtained. In addition, there is no phase noise in the autocorrelation operation result of the signal obtained by adding the positive sideband signal and the negative sideband signal corresponding to the same target, so that the distance information of the target is not interfered by the phase noise, and accuracy of the distance information is ensured.

According to the third possible implementation of the first aspect, in a fifth possible implementation of the detection apparatus, the detection result includes a moving speed of a to-be-measured target; and the performing quadrature demodulation on the at least three processed output signals to obtain the detection result includes:
determining a moving speed of a same target based on a difference between center frequencies of a positive sideband signal and a negative sideband signal corresponding to the same target, where the positive sideband signal and the negative sideband signal are obtained through quadrature demodulation.

In this manner, speed information of the target may be obtained. In addition, there is no phase noise in an autocorrelation operation result of a signal obtained by adding the positive sideband signal and the negative sideband signal corresponding to the same target, so that the speed information of the target is not interfered by the phase noise, and accuracy of the speed information is ensured.

According to the fourth possible implementation or the fifth possible implementation of the first aspect, in a sixth possible implementation of the detection apparatus, the performing quadrature demodulation on the at least three processed output signals to obtain the detection result further includes:
performing quadrature demodulation on the at least three processed output signals to obtain a plurality of positive sideband signals and a plurality of negative sideband signals;
performing autocorrelation operation on a signal obtained by adding any positive sideband signal and any negative sideband signal, to obtain a plurality of autocorrelation operation results; and
determining, in the plurality of autocorrelation operation results, a positive sideband signal and a negative sideband signal corresponding to an autocorrelation operation result whose peak sidelobe ratio exceeds a threshold as the positive sideband signal and the negative sideband signal corresponding to the same target.

In this manner, one negative sideband signal corresponding to a same target may be found in the plurality of negative sideband signals for any positive sideband signal, so that the plurality of positive sideband signals and the plurality of negative sideband signals that are obtained through quadrature demodulation may correspond to a plurality of targets, thereby effectively improving reliability and accuracy of multi-target ambiguity resolution, and improving a processing capability of the detection apparatus.

According to the first aspect or any one of the foregoing possible implementations of the first aspect, in a seventh possible implementation of the detection apparatus, the transceiver includes:
an optical coupling unit, configured to: output, to a space scanning unit by using a preset first path, the first signal obtained by splitting, and output, to the coupler by using a preset second path, the second signal from the space scanning unit, where the first path is different from the second path; and
the space scanning unit, configured to: transmit the first signal from the optical coupling unit at a plurality of preset angles, and receive the second signal and output the second signal to the optical coupling unit.

The first signal and the second signal are isolated by controlling that the first signal path is different from the second signal path, so that the first signal and the second signal are isolated and are not interfered by each other. The first signal is transmitted at the plurality of preset angles, so that the first signal can be detected at a corresponding angle, pertinence of detection of a target is strong, and detection is more flexible.

According to the seventh possible implementation of the first aspect, in an eighth possible implementation of the detection apparatus, the optical coupling unit includes:
an optical collimator, configured to: perform collimation processing on the first signal obtained by splitting, and output the first signal to an optical fiber circulator; and
the optical fiber circulator, configured to: control a beam path of the collimated first signal, output the collimated first signal to the space scanning unit by using the preset first path, control a beam path of the second signal from the space scanning unit, and output the second signal to the coupler by using the preset second path.

Through collimation processing, the first signal can enter the fiber circulator more efficiently, and a power loss of a signal transmitted by the transceiver to an environment is reduced. The fiber circulator can implement path control of the first signal and the second signal, and reduce interference degrees of the first signal and the second signal.

According to the first aspect or any one of the foregoing possible implementations of the first aspect, in a ninth possible implementation of the detection apparatus, the transceiver further includes:
an optical power amplification unit, configured to: perform power amplification on the first signal obtained by splitting, and output an amplified first signal to the optical coupling unit.

Through power amplification, a signal-to-noise ratio of the first signal can be increased, so that a signal-to-noise ratio of the second signal is also high, and a detection result obtained by the coupler and the processor through processing can be better.

According to the first aspect or any one of the foregoing possible implementations of the first aspect, in a tenth possible implementation of the detection apparatus, the apparatus further includes:
the modulator, configured to: receive a modulation signal, and modulate a fourth signal from a laser based on the modulation signal, to obtain the third signal.

The modulator may be a low-cost electroabsorption modulator, to further control the costs of the detection apparatus.

According to a second aspect, an embodiment of this application provides a radar, including the detection apparatus according to one or more of the first aspect or the plurality of possible implementations of the first aspect.

According to a third aspect, an embodiment of this application provides a terminal, including the radar in the second aspect. The terminal may be one or more of terminal devices such as an intelligent vehicle, a smart home, a robot, and an unmanned aerial vehicle with a surveying and mapping function.

These aspects and other aspects of this application are more concise and more comprehensible in descriptions of the following (a plurality of) embodiments.

### BRIEF DESCRIPTION OF DRAWINGS

The accompanying drawings included in this specification and constituting a part of this specification and this specification jointly show example embodiments, features, and aspects of this application, and are intended to explain the principles of this application.
FIG. 1 is a schematic diagram of a structure of a frequency-modulated continuous wave radar system in a conventional technology;
FIG. 2 is a schematic diagram of a structure of another frequency-modulated continuous wave radar system in a conventional technology;
FIG. 3a is a schematic diagram of frequency waveforms of a transmission signal and an echo signal when there is no speed-distance ambiguity in a frequency-modulated continuous wave radar system in a conventional technology;
FIG. 3b is a schematic diagram of frequency waveforms of a transmission signal and an echo signal when there is a speed-distance ambiguity in a frequency-modulated continuous wave radar system in a conventional technology;
FIG. 3c is a schematic diagram of a speed-distance ambiguity removing method of a frequency-modulated continuous wave radar system in a conventional technology;
FIG. 4 shows an example application scenario of a detection apparatus according to an embodiment of this application;
FIG. 5 shows an example application scenario of a detection apparatus according to an embodiment of this application;
FIG. 6 is a schematic diagram of an example structure of a detection apparatus according to an embodiment of this application;
FIG. 7 is a schematic diagram of an example structure of a detection apparatus according to an embodiment of this application;
FIG. 8 is a schematic diagram of an example structure of a radio frequency unit according to an embodiment of this application;
FIG. 9a is a schematic diagram of an example structure of a transceiver 101 according to an embodiment of this application;
FIG. 9b is a diagram of an example structure of a transceiver 101 according to an embodiment of this application;
FIG. 9c is a diagram of an example structure of an optical coupling unit 1012 according to an embodiment of this application;
FIG. 10 is a diagram of an example structure of a coupler 102 according to an embodiment of this application;
FIG. 11 is a schematic diagram of an example of a complex spectrum of a quadrature demodulation result according to an embodiment of this application;
FIG. 12 is a schematic diagram of an example of a positive sideband signal and a negative sideband signal that are obtained through separation based on a quadrature demodulation result according to an embodiment of this application;
FIG. 13a is a schematic diagram of an example of an autocorrelation result of a sum of a positive sideband signal and a negative sideband signal according to an embodiment of this application; and
FIG. 13b is a schematic diagram of another example of an autocorrelation result of a sum of a positive sideband signal and a negative sideband signal according to an embodiment of this application.

### DESCRIPTION OF EMBODIMENTS

The following describes various example embodiments, features, and aspects of this application in detail with reference to the accompanying drawings. Identical reference signs in the accompanying drawings represent elements that have same or similar functions. Although various aspects of embodiments are shown in the accompanying drawings, unless otherwise particularly specified, the accompanying drawings do not need to be drawn to scale.

The specific term "example" herein means "used as an example, embodiment or illustration". Any embodiment described as an "example" herein is not necessarily explained as being superior or better than other embodiments.

In addition, to better describe this application, numerous specific details are given in the following specific implementations. A person skilled in the art should understand that this application can also be implemented without some specific details. In some examples, methods, means, elements, and circuits that are well-known to a person skilled in the art are not described in detail, so that the subject of this application is highlighted.

The following describes terms that may appear in embodiments of this application.

A lidar is a radar that uses a laser as a radiation source. The working principle of the lidar is to detect a corresponding target object by transmitting a signal by using the laser and receiving an echo signal reflected by the target object.

A frequency-modulated continuous wave is an electromagnetic wave whose frequency changes with time.

A frequency-modulated continuous wave of linear frequency sweeping is a frequency-modulated continuous wave whose frequency changes linearly with time. A linear change generally refers to a linear change in a cycle. A waveform of a frequency change is generally a sawtooth wave or a triangular wave, and there may also be another possible waveform, for example, a pulse.

Frequency sweeping nonlinear noise: In an actual radar system, an actual frequency linearity of a signal inevitably deviates from an ideal frequency linearity in a time period due to various factors such as a device feature. That is, the actual signal is inevitably affected by the frequency sweeping nonlinear noise.

A laser phase noise (Phase noise) is a phenomenon that a phase of an optical signal output by a laser changes randomly under the effect of various noises.

Double-sideband modulation (double-sideband modulation, DSB): Intensity modulation is performed on a carrier, to enable carrier intensity (light intensity) changes with a modulation signal law. In this way, two frequency-symmetric sideband optical components are obtained from a modulated signal.

Quadrature demodulation is also referred to as I/Q demodulation (in-phase/quadrature demodulation), and indicates a demodulation mode in which an in-phase component (I component) and a quadrature component (Q component) of a signal are demodulated at the same time to convert a real signal into a complex signal. The in-phase component is a signal component whose phase is the same as a signal phase. The quadrature component is a signal component whose phase is 90 degrees different from the signal phase. The in-phase component and the quadrature component obtained after quadrature demodulation are orthogonal signals.

An electroabsorption modulator (electroabsorption modulator, EAM) is a modulator that uses a quantum well structure or another technology to establish a relationship between an electric field and a light absorption effect, and controls light intensity of a modulated signal by using an external electric field.

An optical fiber coupler (optical fiber coupler) is a device that couples and redistributes energy between a plurality of fibers through a mode coupling effect.

Distance-speed ambiguity: For a distance measurement system (such as a lidar) based on a frequency-modulated continuous wave technology, when a to-be-measured target is in a moving state, an echo signal received by the distance measurement system includes a frequency shift caused by the Doppler effect. The distance measurement system processes a frequency shift of a final beat-frequency signal that corresponds to a location of a target and that is obtained based on the echo signal, and the frequency shift cannot be distinguished from the frequency shift caused by the Doppler effect. Therefore, a target distance cannot be accurately measured.

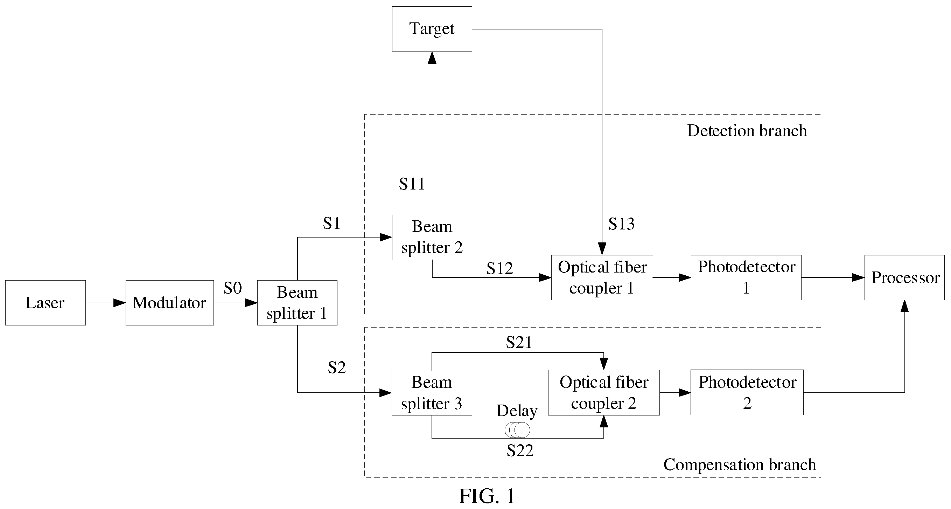

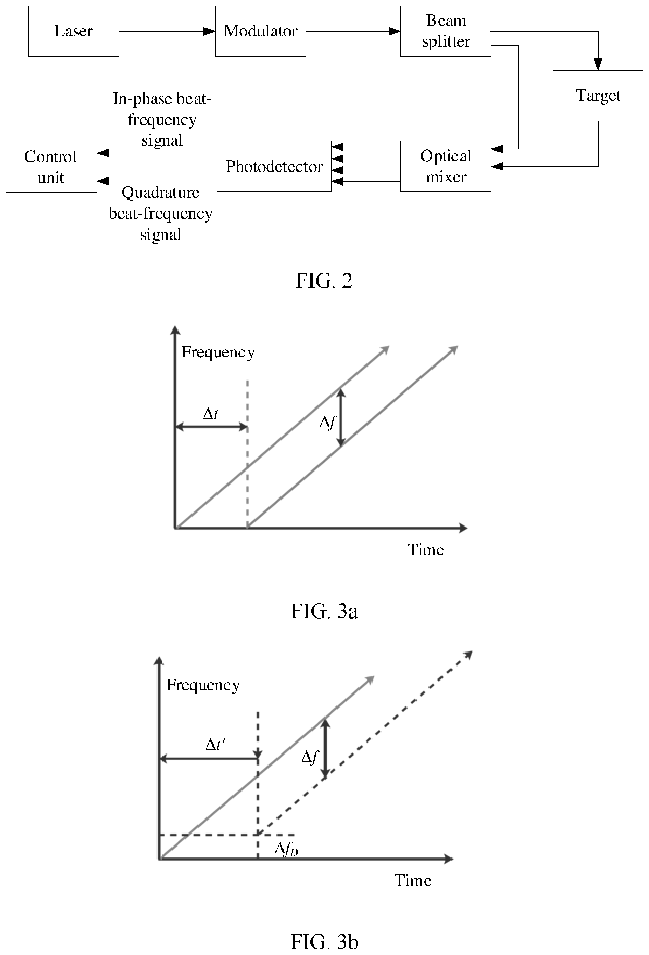

The following describes a solution to improving distance measurement performance of a frequency-modulated continuous wave radar system in a conventional technology. FIG. 1 and FIG. 2 are schematic diagrams of structures of two frequency-modulated continuous wave radar systems in conventional technologies.

In one conventional technology, a solution of constructing a detection branch and an extra compensation branch in the frequency-modulated continuous wave radar system, measuring a phase noise and a frequency sweeping nonlinear noise of the frequency-modulated continuous wave by using the compensation branch, and subsequently compensating for a distance measurement result of the detection branch by using an algorithm is provided. As shown in FIG. 1, the radar system may include a laser, a modulator, beam splitters 1 to 3, optical fiber couplers 1 and 2, optoelectronic detector 1 and 2, and a processor. The laser transmits an optical signal, and the modulator modulates the optical signal into a frequency-modulated continuous wave S0. S0 is divided into two beams (S1 and S2) by the beam splitter 1. The beam S1 is transmitted to a detection branch, and S1 is divided into two beams (S11 and S12) by the beam splitter 2 in the detection branch. The beam S11 is transmitted as a transmission signal to an environment for target detection, the other beam S12 is used as a local optical signal and is coupled to an echo signal S13 of the transmission signal S11. After being detected by the photoelectric detector 1, a coupled signal obtains a distance measurement result affected by a noise and outputs the result to the processor. The other beam S2 is transmitted to a compensation branch, and is divided into two beams (S21 and S22) by using the beam splitter 3 in the compensation branch. The beam S22 is delayed by using an optical fiber, and is coupled to the other beam S21 to obtain a delayed self-heterodyne signal. The delayed self-heterodyne signal includes differential information of a laser phase noise and a frequency sweeping nonlinear noise. After being detected by the photoelectric detector 2, a detection result including noise information is obtained and output to the processor. A function of the compensation branch is usually implemented by an unbalanced Mach-Zehnder interferometer. In the processor, data processing may be performed, based on the noise information obtained by the compensation branch, on a distance measurement result that is affected by a noise and that is obtained by the detection branch, so as to eliminate a measurement error caused by the noise, and obtain a distance measurement result in which noise impact is eliminated.

The processor may further process the distance measurement result obtained after the noise impact is eliminated, to further eliminate impact of a distance-speed ambiguity. As shown in FIG. 3a, in an ideal case, a detected frequency difference △f between a transmission signal and an echo signal is a real frequency difference between the transmission signal and the echo signal. A delay △t of the echo signal may be determined based on a frequency sweeping linearity (that is, a slope of the transmission signal) of △f, and an accurate target distance may be calculated based on △t. In this case, there is no distance-speed ambiguity in related information of a target finally obtained by the processor through calculation. In an actual scenario, as shown in FIG. 3b, a detected frequency difference between the transmission signal and the echo signal is △f, and a real frequency difference between the transmission signal and the echo signal may be △f+△f_{D}. A delay of the echo signal obtained through calculation based on △f cannot be equal to a real delay △t'. In this case, there is a distance-speed ambiguity in related information of a target finally obtained by the processor through calculation.

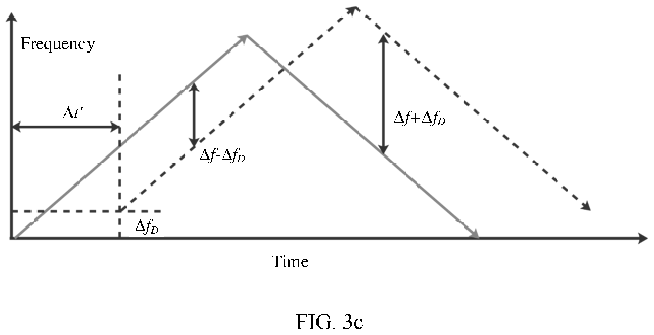

In the conventional technology, a triangular wave frequency sweeping solution in FIG. 3c is applied to remove an ambiguity. As shown in FIG. 3c, when this solution is used, a transmission frequency of the transmission signal regularly changes based on a periodic triangular wave. A real frequency difference between the transmission signal and the echo signal may be obtained by summing up frequency differences △f+△f_{D} and △f-△f_{D} between the transmission signal and the echo signal. Therefore, a delay of the echo signal can be accurately calculated, and distance information of a target can be determined.

In the technical solution in the conventional technology, to ensure accuracy of a detection result, an extra compensation branch needs to be disposed. This causes a corresponding increase in hardware costs. Moreover, the compensation branch includes an unbalanced Mach-Zehnder interferometer. Generally, to ensure accuracy and stability of a noise measurement result, an arm length of the interferometer needs to reach tens of meters. Even if a delay is implemented by using the optical fiber, a size of a lidar system is greatly increased. In addition, the solution uses the interferometer with a long arm, and disturbances such as vibration and temperature drift are easily coupled to an interferometer signal in a harsh environment, resulting in extra interference. Furthermore, because the measurement branch and the compensation branch do not have a same source, the solution cannot effectively compensate for a phase noise caused by environmental interference such as atmospheric turbulence and body vibration. In addition, using the triangular wave frequency sweeping solution reduces an amount of data obtained by the processor through calculation, and affects judgment of the related information of the target, for example, distance information, to some extent. Therefore, accuracy of the detection result is not satisfactory.

Still another conventional technology relates to a solution to implementing double-sideband modulation by using a modulator and implementing quadrature demodulation by using a 90° optical mixer. As shown in FIG. 2, after a carrier transmitted by a laser enters a modulator, double-sideband modulation is implemented, and two sidebands perform positive and negative symmetric frequency sweeping, to obtain a double sideband frequency-modulated continuous wave of linear frequency sweeping. Then, a beam splitter divides the frequency-modulated continuous wave into two beams. One beam is transmitted as a transmission signal to an environment for target detection, and the other beam is used as a local optical signal, and is incident to a 90° optical mixer in a 2×2 structure together with an echo signal of the transmission signal. The optical mixer outputs an in-phase component and a quadrature component based on the local optical signal and the echo signal. After passing through the photoelectric detector, the optical mixer generates an in-phase beat-frequency signal and a quadrature beat-frequency signal to implement quadrature demodulation. A complex spectrum may be obtained in a control unit, signals belonging to a positive sideband and a negative sideband in the in-phase beat-frequency signal and the quadrature beat-frequency signal are separated, and then a plurality of targets are distinguished based on frequency information of each sideband signal, and a distance and a speed of each target are calculated.

Because no phase noise compensation solution is introduced, the conventional technology is interfered by a phase noise of the laser. In addition, in the conventional technology, the 90° optical mixer with high manufacturing costs is used to implement quadrature demodulation, and hardware costs of a current radar system are high. Furthermore, when a target is in a moving state, because a laser wavelength is extremely short, a frequency of the echo signal changes greatly. Therefore, when there are a plurality of moving targets, different echo signal frequencies of the plurality of moving targets may be similar at a same moment. In this case, the plurality of moving targets cannot be distinguished through only the frequency. Therefore, the solution in the second conventional technology does not have ideal distance measurement performance in a multi-target moving scenario.

To sum up, the conventional technology is not satisfactory in terms of removing environmental noise interference or reducing hardware costs, and therefore cannot satisfy a radar system that implements relatively high detection accuracy at low costs.

To resolve the foregoing technical problem, this application provides a detection apparatus, a radar, and a terminal. Hardware costs of the detection apparatus in an embodiment of this application are low. When the detection apparatus is applied to a radar system and the radar system is further applied to the terminal, hardware costs of the radar system and the terminal can be reduced.

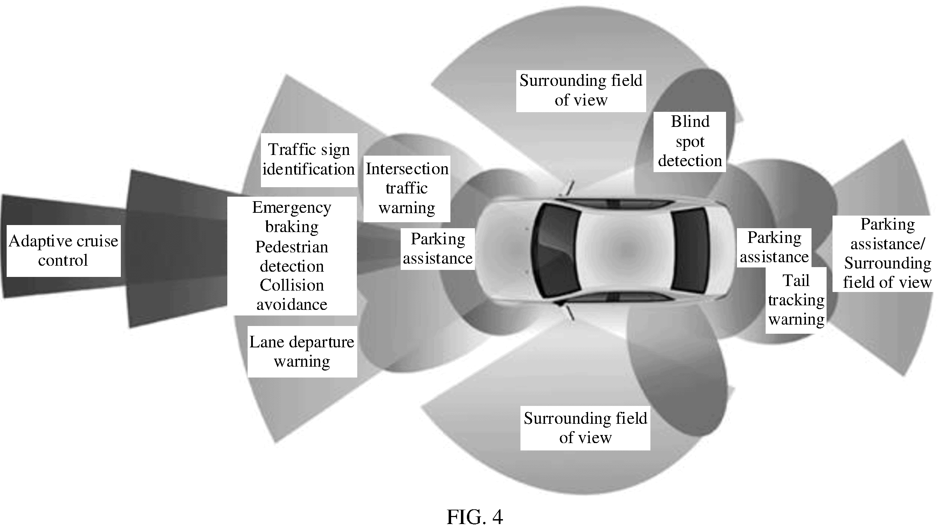

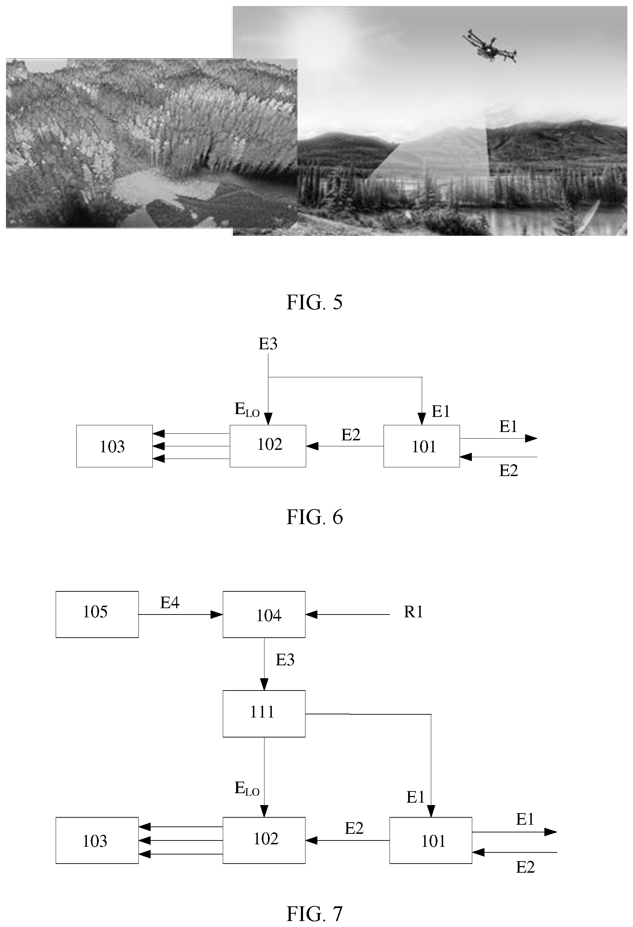

FIG. 4 and FIG. 5 show example application scenarios of the detection apparatus according to this embodiment of this application.

As shown in FIG. 4, the detection apparatus in this embodiment of this application is mainly applied to an advanced driver assistance system of a vehicle, and is used as a part of a plurality of sensors in the advanced driver assistance system, to provide a distance sensing result and a speed sensing result that are of high-reliability, high-precision, and large-range distance. The plurality of sensors of the vehicle may include a long-distance radar for adaptive cruise control; a camera for traffic sign identification, lane departure warning, and providing a surrounding field of view and parking assistance; a medium/short-distance radar for providing intersection traffic warning, blind spot detection, and tail tracking warning; an ultrasonic wave for providing parking assistance; and the detection apparatus for emergency braking, pedestrian detection, and collision avoidance in this embodiment of this application.

In addition, as shown in FIG. 5, the detection apparatus in this embodiment of this application may be further used in another application scenario that requires precise distance measurement, precise spatial modeling, and the like, and has a very high requirement on device stability, channel isolation, and the like, for example, surveying and mapping based on an unmanned aerial vehicle or a vehicle, or a remote sensing technology.

The following first describes an example structure of the detection apparatus according to this embodiment of this application with reference to FIG. 6 to FIG. 9c.

FIG. 6 is a schematic diagram of the example structure of the detection apparatus according to this embodiment of this application. The detection apparatus can be applied to an FMCW lidar.

As shown in FIG. 6, a first signal E1, a second signal E2, a local oscillation signal E_{LO}, and a third signal E3 in the detection apparatus provided in this embodiment of this application may be laser signals based on a frequency-modulated continuous wave technology. The detection apparatus may transmit, for example, the first signal E1, so that the first signal E1 may be reflected by a target object in an environment, to obtain a reflected signal of the first signal E1, that is, the second signal E2. When the second signal E2 is received by the detection apparatus, a coupler 102 and a processor 103 in the detection apparatus may perform analysis processing on the second signal E2, for example, determine a change generated when a frequency of the second signal E2 is compared with a frequency of the local oscillation signal E_{LO}, and further determine related information of the target object. In this case, the detection apparatus completes detection once to obtain a detection result.

In a possible implementation, the detection apparatus provided in this embodiment of this application includes: a transceiver 101, the coupler 102, and the processor 103.

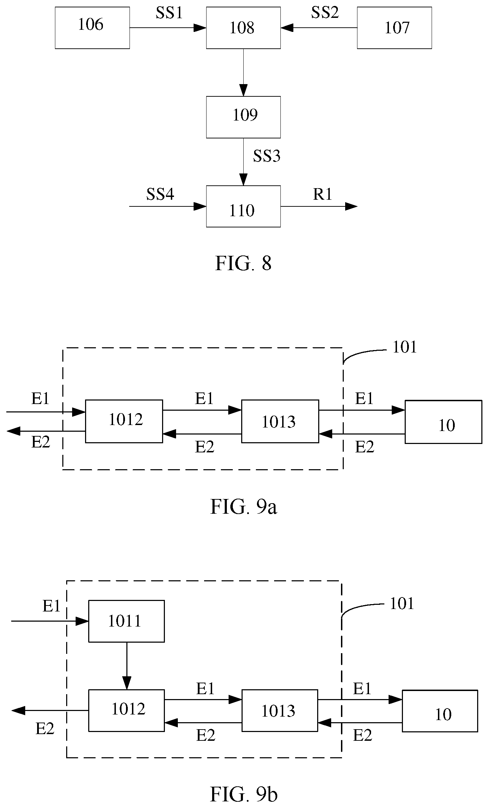

The transceiver 101 is configured to transmit the first signal E1, where the first signal includes a double-sideband signal, and is configured to receive the second signal E2, where the second signal is the reflected signal corresponding to the first signal. Specifically, the transceiver 101 may be configured to: process a received signal, transmit a laser signal, and receive a laser signal. In a design, the transceiver may include a space scanning unit and an optical coupling unit. The optical coupling unit converges a part of the first signal E1 into a collimated space light beam and transmits the collimated space light beam, and couples the reflected signal E2 of the target into the coupler 102. The space scanning unit receives a control signal of a controller (not shown in the figure), adjusts a spatial angle corresponding to the space scanning unit, and transmits a collimated space light beam E1 transmitted by the optical coupling unit to a specified direction, and transmits the reflected signal E2 in the specified direction to the optical coupling unit. For an example structure of the transceiver, refer to FIG. 9a, FIG. 9b, and related descriptions in the following.

The double-sideband signal may be, for example, a laser signal including two symmetric positive and negative sidebands. A frequency of the positive sideband signal is a positive value, and a frequency of the negative sideband signal is a negative value. At a same moment, the frequency of the positive sideband signal and the frequency of the negative sideband signal may be opposite numbers of each other. The frequency of the positive sideband signal and the frequency of the negative sideband signal may change linearly, for example, with time, and an absolute value of the frequency of the positive sideband signal and an absolute value of the frequency of the negative sideband signal linearly change to the same extent.

The coupler 102 receives the local oscillation signal E_{LO} and the second signal E2, and outputs at least three output signals. The local oscillation signal E_{LO} and the first signal E1 are obtained by splitting the third signal E3 from a modulator. In this embodiment of this application, beam splitting indicates that the third signal E3 is divided into the local oscillation signal and the first signal based on a specific power ratio. For example, when the power ratio is 1:9, power of the local oscillation signal is 1/10 of the third signal E3, and power of the first signal is 9/10 of the third signal E3. A power ratio of two signals obtained during beam splitting is not limited in this application. In addition to power, other parameters such as a phase and a frequency of the two signals obtained by beam splitting are the same. The at least three output signals may be, for example, output signals that are obtained by performing frequency mixing based on the local oscillation signal E_{LO} and the second signal E2 and have a specific phase difference between every two of the output signals. Because the local oscillation signal and the first signal are obtained by splitting the third signal from the modulator, the local oscillation signal and the first signal include information such as a same frequency and a same phase, so that the local oscillation signal may be used for mixing detection with the reflected signal of the first signal. The output signal is obtained based on the local oscillation signal E_{LO} and the second signal E2, and the second signal E2 is obtained by the first signal E1 reflected by the target in the environment. Therefore, the output signal includes related information of the target in the environment.

The processor 103 obtains the detection result based on the at least three output signals. The detection result may include one or more pieces of distance information and/or speed information. Because the output signal may include the related information of the target in the environment, the distance information may indicate a distance between the target in the environment and the detection apparatus or a specific location (for example, the detection apparatus), and the speed information may indicate a speed of the target in the environment relative to the detection apparatus. When the second signal E2 is obtained after being reflected by a target in the environment, the detection result may include a piece of distance information and/or speed information, and the distance information and/or the speed information corresponds to the target. When the second signal is obtained after being reflected by a plurality of targets in the environment, the detection result may include a plurality of pieces of distance information and/or speed information. Optionally, the plurality of pieces of distance information may be in a one-to-one correspondence with the plurality of targets, and the plurality of pieces of speed information may be in a one-to-one correspondence with the plurality of targets.

The processor 103 may be implemented by using an application-specific integrated circuit (application-specific integrated circuit, ASIC), or implemented by using a general-purpose processor such as a central processing unit (central processing unit, CPU) or a single-chip microcomputer, or implemented by using a programmable device such as a field programmable gate array (field programmable gate array, FPGA), or may be implemented based on an original processor of a radar or a vehicle. The processor 103 may implement various processing in this embodiment of this application by running computer-readable code. The computer-readable code may be stored in a non-volatile computer-readable storage medium, or may be downloaded through a network or the like.

According to the detection apparatus in this embodiment of this application, the transceiver may transmit the double-sideband first signal, and may receive the second signal obtained by reflecting the first signal at a target location. The coupler may receive the local oscillation signal and the second signal, and the local oscillation signal is obtained by splitting the third signal from the modulator, so that the local oscillation signal and the first signal include same information. Mixing detection is performed on the local oscillation signal and the second signal to obtain the at least three output signals. The processor processes the at least three output signals, to obtain the detection result with high accuracy. Because costs of the coupler that outputs the at least three output signals are low, the hardware costs of the detection apparatus can be reduced. When the detection apparatus is applied to the radar system and the radar system is further applied to the terminal, the hardware costs of the radar system and the terminal can be reduced.

Further, as shown in FIG. 7, the detection apparatus may further include a laser 105, a modulator 104, a beam splitter 111, and a controller (not shown). That is, the detection apparatus may include the laser 105, the modulator 104, the beam splitter 111, the controller, the transceiver 101, the coupler 102, and the processor 103. The laser 105 may be disposed as being connected to the modulator 104. The transceiver 101, the coupler 102, and the processor 103 are sequentially connected. The beam splitter 111 may be disposed as, for example, that a first end of the splitter is connected to the modulator 104 and a second end and a third end are respectively connected to the transceiver 101 and the coupler 102. The controller may be disposed as, for example, being connected to the transceiver 101. The laser 105, the modulator 104, the beam splitter 111, the controller, and the transceiver 101 can cooperate to implement functions of generating a transmission signal (E1) of the lidar and transmitting the transmission signal. The transceiver 101, the coupler 102, and the processor 103 can cooperate to implement functions of receiving an echo signal (E2) of the laser radar and processing the echo signal (E2) to obtain the detection result. A person skilled in the art should understand that specific structures of the laser 105, the modulator 104, the beam splitter 111, the controller, and the transceiver 101 are not limited to the example structures provided in this embodiment of this application. A person skilled in the art may select a laser 105, a modulator 104, a beam splitter 111, a controller, and a transceiver 101 of another structure based on the conventional technology.

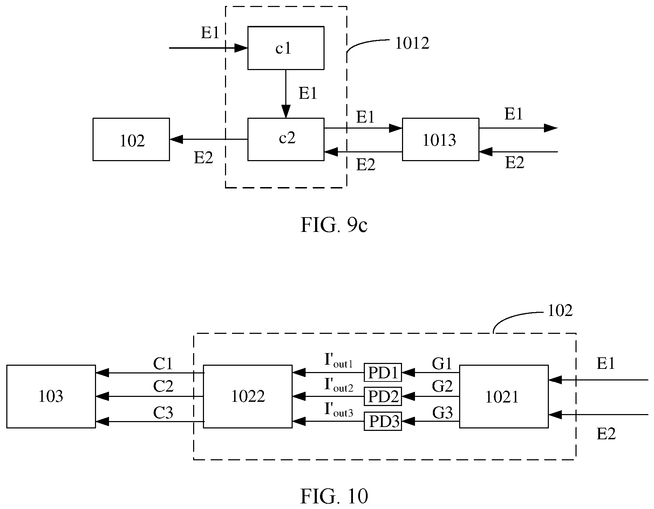

With reference to the example structure of the detection apparatus in FIG. 7, an example procedure in which the detection apparatus in this embodiment of this application completes detection once is as follows. When the detection apparatus starts to perform detection, the laser 105 first transmits a laser signal (a fourth signal E4) to the modulator. The fourth signal E4 may be, for example, an optical signal having a single frequency, and is used as a transmission carrier of a modulation signal. In a possible implementation, the modulator 104 is configured to receive a modulation signal R1, and modulate the fourth signal E4 from the laser based on the modulation signal R1 to obtain the third signal E3. The modulation signal R1 may be a radio frequency signal having a high frequency sweeping linearity, and a frequency change of the third signal E3 may be controlled by using the modulation signal R1. A laser signal (the fourth signal E4) is modulated in the modulator to obtain a laser signal (the third signal E3) that includes a double-sideband signal. The laser signal (the third signal E3) is split into two channels by the beam splitter 111. One channel (the first signal E1) is transmitted to the transceiver 101 for target detection, and the other channel (the local oscillation signal E_{LO}) is transmitted to the coupler 102 for processing of a reflected signal (the second signal E2). The beam splitter 111 may be integrated into the modulator 104, or integrated into the transceiver 101. This is not limited in this application. The first signal E1 is received by the transceiver 101, and becomes a collimated light beam after processed by the optical coupling unit in the transceiver 101. After the space scanning unit of the transceiver 101 implements multi-angle reflection based on the control signal from the controller, the first signal E1 is transmitted to the environment, and is reflected by the target in the environment to obtain the second signal E2. The second signal E2 is received by the optical scanning unit in the transceiver 101, and is transmitted to the coupler 102 by using the optical coupling unit in the transceiver 101. For an example structure of the optical coupling unit, refer to FIG. 9c and related descriptions in the following. Optionally, the transceiver 101 may further include an optical power amplification unit disposed before the optical coupling unit, and the optical power amplification unit is configured to: before the first signal becomes the collimated light beam, perform power amplification processing on the first signal, so that a signal transmitted by the space scanning unit to the environment has higher power. The coupler may receive the local oscillation signal from the beam splitter and the second signal from the transceiver, and perform frequency mixing detection on the local oscillation signal and the second signal. An output signal obtained through frequency mixing detection is output by the coupler to the processor. The processor processes the output signal from the coupler, to obtain a detection result including location information and/or a moving speed of the target. After the detection result is obtained, it may be considered that the detection apparatus completes detection once.

Generally, the laser 105 may be a laser whose laser linewidth is less than or equal to 10 MHz. Because there is a phase noise in the laser 105, the fourth signal E4 output by the laser 105, the third signal E3 obtained by modulating the fourth signal E4, the first signal E1 obtained by splitting the third signal E3, the local oscillation signal E_{LO}, and the second signal E2 subsequently obtained all include phase noises. When the phase noise of the laser 105 is severe, the noise of the second signal E2 is excessively large, and a signal-to-noise ratio declines. Further, the detection result of the detection apparatus is also interfered by the phase noise, and an error is generated. However, the phase noise of the laser and the linewidth of the laser are in a linear relationship in direct proportion. Therefore, when the linewidth of the laser 105 is relatively narrow, phase noise interference can be suppressed. To reduce the phase noise in the fourth signal E4 to a greater extent, a laser (for example, a laser whose laser linewidth is close to 100 kHz) that can transmit an optical signal with a narrow linewidth and stable power at a single frequency may be selected to further suppress the phase noise.

In addition to the phase noise, the fourth signal E4 output by the laser 105 may further include another noise such as a relative intensity noise. The fourth signal E4 may be obtained by selecting a laser having a relatively low relative intensity noise (for example, a laser having a relative intensity noise less than -40 dB), so as to reduce interference of a noise to the detection result.

In addition, the laser 105 may be a laser having large output power. A reason is that in a process in which the modulator 104 performs double-sideband modulation on the fourth signal E4, if modulation efficiency of the modulator 104 is low, a large energy loss is caused, and power of the third signal E3 is insufficient. In this case, power of the first signal E1 obtained by splitting the third signal E3 is also insufficient. The first signal E1 may be first amplified and then transmitted, so that power of a signal received by the processor 103 is high enough, to obtain an accurate detection result through processing. In the power amplification step, an excessive noise is easily introduced into the first signal E1. Generally, a laser with output power of more than 10 mW may be used.

Further, the laser 105 may be a laser that works in a 1550 nm wave band and/or whose side mode suppression ratio is greater than 40 dB, for example, a distributed feedback laser (distributed feedback laser, DFB), a distributed Bragg reflector (distributed Bragg reflector, DBR) laser, or another semiconductor laser. A distributed feedback laser and the distributed Bragg reflector laser are relatively low in costs and have been widely mass produced, can be highly integrated with the modulator 104, and can be applied to a radar together with the detection apparatus. This can greatly reduce a radar size. Further, it is convenient for the radar to be applied to a plurality of terminals such as a vehicle.

A person skilled in the art should understand that the foregoing is merely an example of a manner of selecting a laser. This application does not limit specific values of parameters such as a linewidth, a relative intensity noise, an operating wave band, output power, and a side mode suppression ratio of the laser that is used to provide the fourth signal, and a specific manner of selecting a laser type.

In this embodiment of this application, the first signal E1 may be, for example, a transmission signal of the radar system, the second signal E2 is an echo signal received by the radar system, and the transmission signal may be a frequency-modulated continuous wave. Therefore, before the radar system transmits the transmission signal, modulation may be performed first to obtain a transmission signal whose frequency changes with time, and then a signal obtained through modulation is split to obtain the transmission signal. In this embodiment of this application, the transmission signal is generated in an external modulation manner of loading the modulation signal to a carrier. It can be learned from the foregoing description that the carrier may be a laser signal (the fourth signal) output by the modulator 105, and the modulation signal may be a radio frequency signal having a high frequency sweeping linearity. The following describes an example of a manner of obtaining the modulation signal R1 in this embodiment of this application.

For example, the modulation signal R1 may be generated by a radio frequency unit that can transmit a high-power radio frequency signal of linear frequency sweeping. As shown in FIG. 8, the radio frequency unit may include a digital-to-analog converter 106, a piezoelectric oscillator 107, a multiplier 108, a low-pass filter 109, and a T-shaped bias tee 110.

The digital-to-analog converter 106 can generate a basic linear sweeping signal SS1 whose frequency is within a specific range (for example, within a range of 500 MHz to 1.5 GHz). The basic linear frequency sweeping signal SS1 and a signal SS2 (for example, a signal whose frequency is 5 GHz) output by the intermediate-frequency piezoelectric oscillator 107 are input to the multiplier 108 for frequency mixing, and after being filtered by the low-pass filter 109, a radio frequency signal SS3 whose frequency is within a range of 3.5 GHz to 4.5 GHz is obtained. The radio frequency signal SS3 may be input to the T-shaped bias tee (Bias-T) 110, and is added to the direct current bias signal SS4, to obtain a radio frequency signal having a direct current bias, that is, a modulation signal R1. In this manner, the modulation signal output by the radio frequency unit has an adjustable direct current bias, and a modulation effect can be optimized when the modulation signal is input to the modulator for modulation.

For example, the digital-to-analog converter 106 may select a high-speed digital-to-analog converter, so as to generate a basic linear frequency sweeping signal SS1 with a relatively ideal frequency sweeping linearity. A better frequency sweeping linearity of the basic linear frequency sweeping signal SS1 indicates a smaller frequency sweeping nonlinear noise, so that a frequency sweeping nonlinear noise of the modulation signal R1 output by the radio frequency unit is also smaller, and a frequency sweeping nonlinear noise of the third signal E3 obtained after the modulator 104 modulates the fourth signal E4 based on the modulation signal R1 is also smaller.

Device parameters of the radio frequency unit may be preset, so that a frequency sweeping range of the modulation signal R1 has a specific bias. For example, a frequency sweeping start point of the modulation signal R1 may be determined based on a frequency three to five times a difference between a maximum frequency sweeping frequency and a minimum frequency sweeping frequency of the basic linear frequency sweeping signal SS1. For example, if a frequency sweeping range of the basic linear frequency sweeping signal SS1 is 500 MHz to 1.5 GHz, a maximum frequency sweeping frequency is 1.5 GHz, a minimum frequency sweeping frequency is 500 MHz, and a difference between the two is 1 MHz. In this case, the frequency sweeping start point of the modulation signal R1 is selected from a range of 3 GHz to 5 GHz. By setting the frequency sweeping range of the modulation signal to have a specific bias, a frequency difference between a positive sideband signal and a modulated negative sideband signal that are modulated may be increased, thereby avoiding mutual interference between the positive sideband signal and the negative sideband signal caused by a frequency sweeping nonlinear noise problem that causes inconvenience to signal processing.

A person skilled in the art should understand that the foregoing is merely an example of a manner of obtaining a modulation signal. This application does not limit specific values of the device parameters of the radio frequency unit, and does not limit specific types of devices used by the radio frequency unit. For example, a basic linear frequency sweeping signal that is generated by another device and whose frequency sweeping linearity is not quite ideal may also be selected, and subsequently, a frequency sweep nonlinear noise is compensated in the processor. When a requirement for accuracy is higher, a basic linear frequency sweeping signal generated by a high-speed digital-to-analog converter may also be compensated in the processor to reduce impact of a frequency sweeping nonlinear noise. This is not limited in this application.

In a possible implementation, after obtaining the modulation signal R1 with the specific bias in the frequency sweeping range, the modulator 104 may receive the modulation signal R1, and modulate strength of the fourth signal E4 based on a voltage of the modulation signal R1, to obtain the third signal E3. The modulator 104 may include a low-cost electroabsorption modulator to further control the costs of the detection apparatus. A specific implementation of the modulator is not limited in this application.

In a possible implementation, after the third signal E3 is obtained through modulation, the third signal E3 may be directly split by using the beam splitter, and the beam splitter outputs the first signal and the local oscillation signal. The first signal may be received by the transceiver, and the transceiver 101 may transmit the first signal E1 and receive the reflected second signal E2. The local oscillation signal may be received by the coupler, and the local oscillation signal and the second signal from the transceiver may be processed by the coupler. Alternatively, the beam splitter may be disposed in the modulator, or disposed in the transceiver. A specific manner of disposing the beam splitter is not limited in this application.

FIG. 9a and FIG. 9b are diagrams of example structures of the transceiver 101 according to this embodiment of this application.

As shown in FIG. 9a, the transceiver 101 in this embodiment of this application may include:
an optical coupling unit 1012, configured to output, to a space scanning unit 1013 by using a preset first path, the first signal E1 obtained by splitting, and output, to the coupler by using a preset second path, the second signal E2 from the space scanning unit 1013, where the first path is different from the second path; and
the space scanning unit 1013, configured to: transmit the first signal E1 from the optical coupling unit 1012 at a plurality of preset angles, and receive the second signal E2 and output the second signal E2 to the optical coupling unit 1012.

The first signal and the second signal are isolated by controlling that the first signal path is different from the second signal path, so that the first signal and the second signal are isolated and are not interfered by each other. The first signal is transmitted at the plurality of preset angles, so that the first signal can be detected at a corresponding angle, pertinence of detection of a target is strong, and detection is more flexible.

For example, when the power of the first signal E1 can satisfy a condition of long-distance free space distance measurement, the first signal E1 may be transmitted to the environment by using the optical coupling unit 1012 and the space scanning unit 1013. The first signal E1 may be reflected by a to-be-measured target 10 in the environment, to generate the second signal E2.

It can be learned from the foregoing description that components before the transceiver of the detection apparatus may include, for example, the laser, the modulator, and the beam splitter, and components after the transceiver of the detection apparatus may include, for example, the coupler and the processor. In this case, in the transceiver 101, the optical coupling unit 1012 may be connected to the beam splitter to obtain the first signal, and the optical coupling unit 1012 may be connected to the coupler to output the second signal.

FIG. 9c is a diagram of an example structure of the optical coupling unit 1012 according to this embodiment of this application.

As shown in FIG. 9c, in a possible implementation, the optical coupling unit 1012 includes:
an optical collimator c1, configured to: perform collimation processing on the first signal E1 obtained by splitting, and output the first signal E1 to an optical fiber circulator c2; and
the optical fiber circulator c2, configured to: control a beam path of the collimated first signal E1, output the collimated first signal E1 to the space scanning unit 1013 by using the preset first path, control a beam path of the second signal E2 from the space scanning unit 1013, and output the second signal E2 to the coupler 102 by using the preset second path.

Through collimation processing, the first signal can enter the fiber circulator more efficiently, and power of a signal transmitted by the transceiver to an environment is increased. The fiber circulator can implement path control of the first signal and the second signal, and reduce interference degrees of the first signal and the second signal.

For example, when the power of the first signal E1 satisfies a long-distance free space distance measurement condition, the first signal E1 may be first output to the optical coupling unit 1012, and the optical coupling unit 1012 may include the optical collimator c1 and the optical fiber circulator c2. Specifically, the optical collimator c1 is configured to: perform collimation processing on the first signal E1 from the optical coupling unit 1012, and output the first signal E1 to the optical fiber circulator c2, so that collimation processing can efficiently converge parallel light beams and couple the parallel light beams into the optical fiber, to enable the power of the first signal E1 received by the optical fiber circulator c2 is higher. The optical fiber circulator c2 is configured to: control the beam path of the collimated first signal E1, and output the collimated first signal E1 to the space scanning unit 1013 by using the preset first beam path. The space scanning unit 1013 is responsible for transmitting the first signal E1, and implementing deflection by a specific angle within a period of time, so that the first signal E1 can be scanned to a plurality of directions in space, and be reflected by a plurality of to-be-measured targets in the plurality of directions in space. The space scanning unit 1013 is further configured to receive the reflected second signal E2. In this embodiment of this application, the space scanning unit 1013 may be implemented, for example, based on a micro-electro-mechanical system (micro electro mechanical system, MEMS) reflector, a rotating mirror structure, a swing mirror structure, or a lens structure. Optionally, a deflection angle of the space scanning unit may be preset, or may be adjusted based on a control signal from the controller. A specific implementation of the space scanning unit 1013 is not limited in this application.

The space scanning unit 1013 inputs the second signal E2 to the optical coupling unit 1012. In the optical coupling unit 1012, the optical fiber circulator c2 is further configured to control the beam path of the second signal from the space scanning unit, and output the second signal to the coupler by using the second path different from the first path. In this manner, interference from the first signal can be isolated. The optical coupling unit 1012 is configured to control a beam path and collimate a beam, and may be different from a structure and a function of the coupler 102. A specific manner of disposing the optical coupling unit 1012 is not limited in this application.

As shown in FIG. 9b, in a possible implementation, the transceiver 101 further includes:
an optical power amplification unit 1011, configured to: perform power amplification on the first signal E1 obtained by splitting, and output an amplified first E1 signal to the optical coupling unit 1012.

Through power amplification, a signal-to-noise ratio of the first signal can be increased, so that a signal-to-noise ratio of the second signal is also high, and a detection result obtained by the coupler and the processor through processing can be better.

For example, the power of the first signal E1 may be low and does not satisfy the long-distance free space distance measurement condition, and the second signal E2 is the reflected signal of the first signal E1. In this case, the power of the second signal E2 may be lower. If noise light in the environment is strong, the second signal E2 may be submerged by a noise, and related information of the second signal E2 cannot be accurately obtained. Based on this, as shown in FIG. 9b, the transceiver 101 may further include the optical power amplification unit 1011, which is responsible for optimizing the first signal E1, so that after the power of the first signal E1 is increased to satisfy the long-distance free space distance measurement condition, the first signal E1 is transmitted to the environment by using the optical coupling unit 1012 and the space scanning unit 1013, to improve a signal-to-noise ratio. The optical power amplification unit 1011 is disposed between the beam splitter and the optical coupling unit 1012. The optical power amplification unit 1011 is connected to the beam splitter to receive the first signal, and outputs the amplified first signal to the optical coupling unit 1012. For specific implementations of the optical coupling unit 1012 and the space scanning unit 1013, refer to related descriptions in FIG. 9a.

A parameter of the optical power amplifying unit 1011, for example, an amplification coefficient and an amplification noise figure, may be preset, and the parameter of the optical power amplifying unit 1011 affects only the signal-to-noise ratio, but does not affect the detection result of the processor. A specific manner of setting the parameter of the optical power amplification unit 1011 is not limited in this application.

With reference to FIG. 10 to FIG. 13b and Formula (1) to Formula (32), the following describes a target detection method implemented by a detection apparatus in an embodiment of this application.

The following provides, with reference to Formula (1) to Formula (6), a theoretical deduction of generating a double-sideband third signal E3 by using an electroabsorption modulator.

A voltage of a modulation signal R1 is defined as *V*(*t*) , and a function of the voltage *V*(*t*) of the modulation signal R1 is shown in Formula (1): $V \left(t\right) = A + {A}_{0} cos \left(ωt\right)$ (1)

Herein, *A* represents a direct current bias signal SS4, *A*₀ represents an amplitude of a radio frequency signal SS3, *ω* represents angular frequencies of the radio frequency signal SS3 and the modulation signal, *t* represents time, and *A*₀ *cos*(*ωt*) represents the radio frequency signal SS3.

Transmittance of the electroabsorption modulator is shown in Formula (2): $T \left(V\right) = 1 - F \left[V\right]$ (2)

Herein, *V*= *V*(*t*), F[] is a voltage-absorption function of the electroabsorption modulator, and represents a ratio of a part that can be absorbed by the electroabsorption modulator to power of a fourth signal E4 when instantaneous values of the voltage *V* of the modulation signal are different; and the transmittance of the electroabsorption modulator represents a ratio of a part that can be output by the electroabsorption modulator to the power of the fourth signal E4 when the instantaneous values of the voltage *V* of the modulation signal R1 are different. The electroabsorption modulator can correspondingly adjust the strength (power) of the fourth signal E4 based on the instantaneous value of the voltage *V* of the input modulation signal, and output the adjusted third signal E3. In addition, within a large enough adjustment range, the instantaneous value of the voltage *V* of the modulation signal and a function of strength (power) of the third signal E3 are enabled to maintain good monotonicity and specific linearities. That is, within a specific adjustment range, a larger voltage *V* of the modulation signal indicates a larger ratio of a part that can be absorbed by the electroabsorption modulator in the fourth signal E4 and lower power of the third signal E3 output by the electroabsorption modulator.

Therefore, the transmittance of the electroabsorption modulator may also be approximately represented by a linear piecewise function shown in Formula (3): $T \left(V\right) = \left\{\begin{matrix}1 , & V > 0 \\ 1 + \frac{V}{\left|{V}_{0}\right|} , & {V}_{0} \leq V < 0 \\ 0 , & V \leq {V}_{0}\end{matrix}\right.$ (3)

Herein, *V*₀ is a constant related to a property of the electroabsorption modulator. It can be seen from Formula (3) that, when the modulation signal R1 supplies a positive voltage (*V* > 0 ) to the electroabsorption modulator, it is approximately considered that the electroabsorption modulator cannot absorb a signal, and the power of the third signal E3 output by the electroabsorption modulator does not change (*T*(*V*) = 1) compared with the power of the input fourth signal E4. When the modulation signal R1 supplies a small negative voltage ( *V*₀ ≤ *V* < 0) to the electroabsorption modulator, the electroabsorption modulator can absorb a part of a signal ( $T \left(V\right) = 1 + \frac{V}{\left|{V}_{0}\right|}$), and it is approximately considered that the power of the third signal E3 output by the electroabsorption modulator linearly decreases with the voltage *V* of the modulation signal. After the negative voltage supplied by the modulation signal R1 to the electroabsorption modulator exceeds a threshold *V*₀ (*V* ≤ *V*₀), it may be approximately considered that all signals are absorbed by the electroabsorption modulator. In this case, no signal is output at an output end of the electroabsorption modulator. In practice, after the negative voltage supplied by the modulation signal R1 to the electroabsorption modulator exceeds the threshold *V*₀, it may be considered that the transmittance *T*(*V*) of the electroabsorption modulator reaches a minimum value point, and a value is determined by an extinction ratio of the electroabsorption modulator. For example, when the extinction ratio is 7 dB, the transmittance *T*(*V*) of the electroabsorption modulator reaches the minimum value point and is equal to 0.2, that is, the power of the third signal E3 output by the electroabsorption modulator is 20% of the power of the fourth signal E4.

When the third signal E3 in this embodiment of this application is a frequency-modulated continuous wave of linear frequency sweeping, the voltage *V* of the modulation signal R1 may be preset based on the threshold *V*₀ of the electroabsorption modulator, so that the voltage supplied by the modulation signal R1 to the electroabsorption modulator can drive the electroabsorption modulator to work in a linear region ( $T \left(V\right) = 1 + \frac{V}{\left|{V}_{0}\right|}$), that is, a voltage range of the modulation signal R1 is: *V*₀ ≤ *V* < 0. In this case, the transmittance *T*(*V*) of the electroabsorption modulator may also be approximately represented by using Formula (4): $T \left(V\right) \approx k - α ⋅ cos \left(ωt\right)$ (4)

Herein, α is a coefficient related to factors such as performance of the electroabsorption modulator and the power of the modulation signal R1, k represents residual carrier power, and *ω* represents an angular frequency of the modulation signal.

The fourth signal E4 (*E*(*t*)) used as a carrier of the modulation signal R1 may be represented by Formula (5): $E \left(t\right) = {E}_{0} exp \left[{ω}_{0}t\right]$ (5)

Herein, *ω*₀ represents an angular frequency of the fourth signal E4, and *E*₀ represents an amplitude of the fourth signal E4.

After the fourth signal E4 and the modulation signal R1 are input to the electroabsorption modulator for modulation, the third signal E3 (*Eₒᵤₜ*(*t*)) output by the electroabsorption modulator may be represented by Formula (6): ${E}_{out} \left(t\right) = \left[k-α⋅cos\left(ωt\right)\right] {E}_{0} exp \left[{ω}_{0}t\right] = \left(k-α\right) E \left(t\right) + \frac{{αE}_{0}}{2} exp \left[\left({ω}_{0}\pm ω\right)t\right]$ (6)

Herein, $\frac{{αE}_{0}}{2} exp \left[\left({ω}_{0}\pm ω\right)t\right]$ is a double-sideband signal, (*k - α*)*E*(*t*) is a residual carrier (the fourth signal) after modulation, and based on a relationship between an angular frequency and a frequency, a spectrum of the third signal E3 may include three frequencies, which are respectively *f*1 *= ω*₀*l*2*π, f2 =* (*ω*₀ *+ ω*)/2*π,* and *f*3 = (*ω*₀ *- ω*)/2π*.* That is, the third signal E3 may be divided into three signal components based on the frequency, signal components whose frequencies are *f*2 and *f*3 respectively correspond to a positive sideband signal and a negative sideband signal, and a signal component whose frequency is *f*1 corresponds to the residual carrier after modulation. The residual carrier (*k - α*)*E*(*t*) after modulation has relatively small impact on accuracy of a detection result obtained by subsequent processing performed by a coupler and a processor. Therefore, the residual carrier after modulation may be ignored. It can be learned that, in the third signal E3, compared with the frequency *f*1, the frequencies of *f2* and *f*1 have a frequency shift equal to a frequency of the modulation signal R1. Therefore, if the modulation signal R1 is a radio frequency signal of linear frequency sweeping, and the frequency *f*0 of the modulation signal R1 linearly changes in a modulation process, a frequency *f*2 of the positive sideband signal and a frequency *f*3 of the negative sideband signal of the third signal E3 obtained through modulation also change linearly, so that the third signal E3 becomes the frequency-modulated continuous wave of linear frequency sweeping.

In a possible implementation, when the electroabsorption modulator is selected to obtain the third signal E3, because a chirp effect exists in the electroabsorption modulator, a phase of the third signal E3 also changes when intensity modulation is performed. This case is equivalent to that phase modulation is performed on intensity modulation, so that the third signal E3 generates a higher order sideband. In this embodiment of this application, the direct current bias signal SS4 may be properly controlled, to reduce impact of the high-order sideband introduced by the chirp effect on subsequent signal processing, so that the impact can be ignored.

In this manner, the third signal E3 of linear frequency sweeping may be obtained. In addition, the low-cost electroabsorption modulator is used for modulation, so that hardware costs of the detection apparatus can be further reduced. A person skilled in the art should understand that, in this embodiment of this application, the third signal E3 may also be obtained by using another modulator, for example, a silicon-based microring electro-optic modulator or a Mach-Zehnder electro-optic modulator. This is not limited in this application.

In a possible implementation, to further improve detection accuracy, in this embodiment of this application, a filter may be disposed to filter out the residual carrier (that is, (*k* - α)*E*(*t*) in Formula (6)) in the third signal E3 after modulation, and the third signal E3 obtained after the carrier is suppressed is split to obtain a first signal and a local oscillation signal. The first signal is used as a transmission signal, and is transmitted to an environment by a transceiver. For example, a fiber grating filter may be placed after the modulator 104, and is configured to receive the third signal E3 and output the third signal of the suppressed carrier. A stop band of the fiber grating filter may be set to be the same as a carrier wavelength, so that the residual carrier (*k* - *α*)*E*(*t*) may be blocked by the fiber grating filter, and the positive sideband signal and the negative sideband signal of the modulated third signal E3 may normally pass through the fiber grating filter, to obtain the third signal E3 that suppresses the carrier. Suppressing the carrier may increase power occupied by valid information (the positive sideband signal and the negative sideband signal) in the third signal E3, reduce an intensity noise introduced by gain contention, and avoid interference caused by existence of the carrier to a distance measurement result. Moreover, the fiber grating filter has relatively low costs, and can obtain a relatively good carrier suppression ratio without significantly increasing the costs of the detection apparatus, thereby further improving performance of the detection apparatus.

A person skilled in the art should understand that, during actual application, another filter with relatively low costs may be selected to implement a filtering function. This is not limited in this application.

In a possible implementation, the local oscillation signal output by a beam splitter and a second signal E2 received by the transceiver 101 are input to the coupler 102, and the coupler 102 implements signal mixing detection to obtain at least three output signals. Each output signal is a beat-frequency signal generated by the coupler 104 based on the local oscillation signal and the second signal E2, and each beat-frequency signal has a specific phase difference with another beat-frequency signal. A beat-frequency signal refers to a signal whose amplitude changes with time, and there may be a phase difference between beat-frequency signals. The coupler 102 may include an optical fiber coupler 1021 having at least three input ends and at least three output ends. Two of the at least three input ends are configured to receive the local oscillation signal and the second signal E2. The two input ends configured to receive the local oscillation signal and the second signal E2 may be any two of the three input ends. By using an optical fiber coupler with three input ends and three output ends, the hardware costs of the detection apparatus can be reduced.

A specific structure of the optical fiber coupler 1021 may be selected based on a requirement. For example, the optical fiber coupler 1021 may include a first optical fiber, a second optical fiber, and a third optical fiber. Two ends of the first optical fiber are respectively used as a first input end and a first output end of the optical fiber coupler 1021, two ends of the second optical fiber are respectively used as a second input end and a second output end of the optical fiber coupler 1021, and two ends of the third optical fiber are respectively used as a third input end and a third output end of the optical fiber coupler 1021. The first optical fiber, the second optical fiber, and the third optical fiber are close to each other, and a coupled zone is generated. In the coupled zone, fiber cores of a plurality of optical fibers are quite close to each other. Therefore, a coupling phenomenon occurs between the plurality of fiber cores, so that a signal on one optical fiber may be coupled to another optical fiber. Because a fact that a part of a signal input by a fiber is coupled to another fiber depends on a working wavelength, a fiber core distance between the fiber and the another fiber, and a fiber core diameter in the coupled zone, based on this, a power ratio of three output signals output by the three fibers, that is, a splitting ratio, may be controlled by presetting a size of the coupled zone. In addition, when the coupled zone has a rotational symmetry structure, an output phase difference of the optical fiber coupler depends on a quantity of optical fibers and the splitting ratio. For example, when the coupler includes three optical fibers and the splitting ratio is 1:1:1, the phase difference of the three output signals may be, for example, equal and 120°. Therefore, the phase difference may be further controlled by controlling the splitting ratio.

The optical fiber coupler having three input ends and three output ends may be referred to as a 3×3 coupler for short. The 3×3 coupler may further be connected to a plurality of optoelectronic detectors PD1 to PD3, and is configured to obtain a corresponding current signal I'ₒᵤₜ₁ - I'ₒᵤₜ₃ based on a beat-frequency signal output by the 3×3 coupler. After three current signals are obtained, for example, an analog-to-digital converter 1022 may be used to sample and quantize the current signal to obtain a first output signal C1, a second output signal C2, and a third output signal C3, which are respectively represented as Iₒᵤₜ₁ - Iₒᵤₜ₃ in the following. The first output signal C1, the second output signal C2, and the third output signal C3 are input to a processor 103 for subsequent processing as shown in FIG. 10.

The following describes a technical principle of obtaining a beat-frequency signal with reference to Formula (7) to Formula (10). First, a scenario in which a photoelectric detector in a conventional technology is directly used to perform detection in a case in which both the local oscillation signal and the second signal E2 include only one frequency component (equivalent to that both the local oscillation signal and the second signal E2 are single sideband signals) is considered. In this case, the local oscillation signal and the second signal E2 may be directly incident to one photoelectric detector. A light field of the local oscillation signal may be expressed, for example, by using Formula (7): ${E}_{lo} = \left|{E}_{lo _ amp}\right| exp j \left[ωt+{πγt}^{2}+θ\left(t\right)\right]$ (7)

Herein, *Eₗₒ* represents the local oscillation signal, E_{lo_amp} represents an amplitude of the local oscillation signal, ω represents an angular frequency of the local oscillation signal, γ represents a frequency sweeping speed of the local oscillation signal and is in a unit of Hz/s, and θ(t) represents a laser phase noise in the local oscillation signal.

A light field of the second signal E2 may be represented, for example, by using Formula (8): ${E}_{s} = \left|{E}_{s _ amp}\right| exp j \left[ω\left(t-τ\right)+πγ{\left(t-τ\right)}^{2}+θ\left(t-τ\right)\right]$ (8)

Herein, *Eₛ* represents the second signal, *E*_{*s*_*amp*} represents an amplitude of the second signal E2, and *τ* represents a delay corresponding to a target distance. A current signal *I*(*t*) output by the photoelectric detector is shown in Formula (9): $I \left(t\right) = \left({E}_{s}+{E}_{lo}\right) {\left({E}_{s}+{E}_{lo}\right)}^{∗} = {I}_{lo} + {I}_{s} + 2 \sqrt{{I}_{lo} {I}_{s}} cos \left[2πγτt+φ\left(t, τ\right)\right]$ (9)

Herein, φ(t, τ) = θ(t) - θ(t - τ) represents a laser phase noise in the second signal E2, and φ(t, τ) complies with Gaussian random distribution. *Iₗₒ* represents a direct current signal detected based on the local oscillation signal, and *Iₛ* represents a direct current signal detected based on the second signal. In a case in which both the local oscillation signal and the second signal E2 are double-sideband signals (including a positive sideband signal and a negative sideband signal), because a relatively large frequency difference (equal to twice the frequency of the modulation signal R1) is introduced between the positive sideband and the negative sideband, the positive sideband and the negative sideband cannot interfere with each other. A current signal I(t) output by the photoelectric detector is shown in Formula (10): $\begin{matrix}I \left(t\right) = \left({E}_{s , up}+{E}_{lo , up}\right) {\left({E}_{s , up}+{E}_{lo , up}\right)}^{∗} + \left({E}_{s , low}+{E}_{lo , low}\right) {\left({E}_{s , low}+{E}_{lo , low}\right)}^{∗} \\ = 2 {I}_{lo} + 2 {I}_{s} + 2 \sqrt{{I}_{lo} {I}_{s}} cos \left[2πγτt+φ\left(t, τ\right)\right] + 2 \sqrt{{I}_{lo} {I}_{s}} cos \left[-2πγτt+φ\left(t, τ\right)\right]\end{matrix}$ (10)

Herein, *E_{s,up}* represents a positive sideband signal in the second signal, *E_{s,low}* represents a negative sideband signal in the second signal, *E_{lo,up}* represents a positive sideband signal in the local oscillation signal, *E*_{*lo*,*low*} represents a negative sideband signal in the local oscillation signal, $2 \sqrt{{I}_{lo} {I}_{s}} cos \left[2πγτt+φ\left(t, τ\right)\right]$ represents a beat-frequency signal of the positive sideband, and $2 \sqrt{{I}_{lo} {I}_{s}} cos \left[-2πγτt+φ\left(t, τ\right)\right]$ represents a beat-frequency signal of the negative sideband. In this case, a positive frequency of the beat-frequency signal of the positive sideband may be *γτ,* and a negative frequency of the beat-frequency signal of the negative sideband may be -γτ. Based on Fourier transformation, if a frequency of a real signal is f, a meaningless frequency -f is introduced to convert the real signal into a complex signal, and a complex spectrum of the signal can be obtained. That is, if the signal includes two frequencies γτ and -γτ, for the frequency γτ, a meaningful frequency γτ and a meaningless frequency -γτ appear on the complex spectrum; and for the frequency -γτ, a meaningful frequency -γτ and a meaningless frequency γτ appear on the complex spectrum. Therefore, it is impossible to distinguish whether information at the frequency equal to γτ and the frequency equal to -γτ is meaningful or meaningless, that is, the beat-frequency signal of the positive sideband and the beat-frequency signal of the negative sideband cannot be separately obtained by using the complex spectrum.

With reference to Formula (11) and Formula (12), the following describes a quadrature demodulation solution by using a 90° optical mixer. In this solution, an extra signal is introduced, and one of the local oscillation signal or the second signal E2 is phase-shifted by 90° in the signal, and then the local oscillation signal or the second signal E2 is input to the photoelectric detector in the conventional technology for detection. A current signal I'(t) obtained after detection is shown in Formula (11): $I ′ \left(t\right) = 2 {I}_{lo} + 2 {I}_{s} + 2 \sqrt{{I}_{lo} {I}_{s}} sin \left[2πγτt+φ\left(t, τ\right)\right] + 2 \sqrt{{I}_{lo} {I}_{s}} sin \left[-2πγτt+φ\left(t, τ\right)\right]$ (11)

In this case, I(t) is an in-phase component obtained through quadrature demodulation, and I'(t) is a quadrature component obtained through quadrature demodulation. In this case, direct current signals in the in-phase component and the quadrature component may be removed, and an amplitude of an alternating current signal is ignored, to obtain a combination as shown in Formula (12): $J \left(t\right) = I \left(t\right) + j ⋅ I ′ \left(t\right) = exp j \left[2πγτt+φ\left(t, τ\right)\right] + exp j \left[-2πγτt+φ\left(t, τ\right)\right]$ (12)

Herein, exp j[2πγτt + φ(t, τ)] represents the beat-frequency signal of the positive sideband, and exp j[-2πγτt + φ(t, τ)] represents the beat-frequency signal of the negative sideband. In this case, the positive frequency of the beat-frequency signal of the positive sideband may be γτ, and the negative frequency of the beat-frequency signal of the negative sideband may be -γτ. Based on Fourier transform, a complex signal of a single frequency is also a single frequency in a complex frequency domain. Therefore, the information at the frequency equal to γτ corresponds to the beat-frequency signal of the positive sideband, and the information at the frequency equal to -γτ corresponds to the beat signal of the negative sideband, that is, the beat-frequency signal of the positive sideband and the beat-frequency signal of the negative sideband may be separately obtained by using the complex spectrum.

However, costs of the 90° optical mixer are high. In this embodiment of this application, the 3×3 coupler with low costs is proposed to implement phase conversion, and quadrature demodulation is implemented in combination with the processor. With reference to Formula (13) to Formula (17), the following describes an example implementation of implementing phase conversion based on the 3×3 coupler and implementing quadrature demodulation with reference to the processor in an ideal case.

In a possible implementation, the coupler 102 may output at least three output signals. The at least three output signals include the first output signal C1, the second output signal C2, and the third output signal C3; and a phase difference between the first output signal C1 and the second output signal C2 is a first phase difference, a phase difference between the second output signal C2 and the third output signal C3 is a second phase difference, a phase difference between the first output signal C1 and the third output signal C3 is a third phase difference; and the first phase difference, the second phase difference, and the third phase difference are greater than or equal to 30 degrees and less than or equal to 150 degrees. When the coupler 102 includes the 3×3 coupler 1021, the three output ends separately output the first output signal C1, the second output signal C2, and the third output signal C3.

In this manner, three output signals having specific phase differences may be obtained, so that the processor can complete quadrature demodulation of the three output signals based on the phase differences of the three output signals, thereby implementing conversion from a real signal to a complex signal. A smaller allowable value range of the first phase difference, the second phase difference, and the third phase difference indicates a higher precision requirement of the coupler, and consequently, costs of the coupler are higher. In this embodiment of this application, quadrature demodulation may be performed on the output signal, to eliminate impact caused by an excessively large or small phase difference. Therefore, when the first phase difference, the second phase difference, and the third phase difference are in a relatively large value range that is greater than or equal to 30 degrees and less than or equal to 150 degrees, an accurate detection result can still be obtained, thereby reducing a precision limitation of the coupler and further reducing costs of the coupler.

The first phase difference, the second phase difference, and the third phase difference may be preset, and a transfer matrix of the 3×3 coupler 1021 is designed based on the preset phase difference. For example, the first phase difference, the second phase difference, and the third phase difference may be preset to be equal to each other and all equal to 2π/3. In an ideal case, the 3×3 coupler 1021 may be, for example, a symmetric coupler, that is, a splitting ratio (a power ratio of each output signal) of the 3×3 coupler 1021 is accurately fixed to 1:1:1, and a phase difference between any two output signals is equal to 2π/3. Based on this, an example of the transfer matrix of the symmetric 3×3 coupler is shown in Formula (13): $\left[\begin{matrix}{E}_{out 1} \\ {E}_{out 2} \\ {E}_{out 3}\end{matrix}\right] = \frac{\sqrt{3}}{3} \left[\begin{matrix}{E}_{lo} + {E}_{s} \\ {E}_{lo} + {E}_{s} ⋅ exp j \frac{2 π}{3} \\ {E}_{lo} + {E}_{s} ⋅ exp j \frac{- 2 π}{3}\end{matrix}\right]$ (13)

In Formula (13), Eₗₒ represents the light field of the local oscillation signal, Eₛ represents the light field of the second signal E2, ${E}_{out 1} = \frac{\sqrt{3}}{3} \left[{E}_{lo}+{E}_{s}\right]$ represents a first optical signal G1, ${E}_{out 2} = \frac{\sqrt{3}}{3} \left[{E}_{lo}+{E}_{s}⋅exp j\frac{2 π}{3}\right]$ represents a second optical signal G2, and ${E}_{out 3} = \frac{\sqrt{3}}{3} \left[{E}_{lo}+{E}_{s}⋅exp j\frac{- 2 π}{3}\right]$ represents a third optical signal G3.

The 3×3 coupler 1021 may separately output the first optical signal G1, the second optical signal G2, and the third optical signal G3 with different phases to the photoelectric detectors PD1 to PD3. The photoelectric detectors PD1 to PD3 convert the three optical signals into three current signals I'ₒᵤₜ₁ - I'ₒᵤₜ₃, and then the analog-to-digital converter 1022 performs sampling and quantization to obtain three output signals Iₒᵤₜ₁ - Iₒᵤₜ₃. For example, it is first considered that in a case in which the first optical signal G1, the second optical signal G2, and the third optical signal G3 each include only one frequency component (equivalent to that the first optical signal G1, the second optical signal G2, and the third optical signal G3 are all single sideband signals), based on the three optical signals G1 to G3 shown in Formula (13), three sampled and quantized current signals output by the coupler 102 may be shown in Formula (14): $\left[\begin{matrix}{I}_{out 1} \\ {I}_{out 2} \\ {I}_{out 3}\end{matrix}\right] = \frac{1}{3} \left[\begin{matrix}{I}_{DC} + A ⋅ cos \left[2πγτt+φ\left(t, τ\right)\right] \\ {I}_{DC} + A ⋅ cos \left[2πγτt+φ\left(t, τ\right)+\frac{2 π}{3}\right] \\ {I}_{DC} + A ⋅ cos \left[2πγτt+φ\left(t, τ\right)-\frac{2 π}{3}\right]\end{matrix}\right]$ (14)

Herein, φ(t, τ) = θ(t) - θ(t - τ) complies with Gaussian random distribution and represents the laser phase noise, ${I}_{out 1} = \frac{1}{3} \left[{I}_{DC}+A⋅cos\left[2πγτt+φ\left(t, τ\right)\right]\right]$ represents a first output signal corresponding to the first optical signal G1, ${I}_{out 2} = \frac{1}{3} \left[{I}_{DC}+A⋅cos\left[2πγτt+φ\left(t, τ\right)+\frac{2 π}{3}\right]\right]$ represents a second output signal corresponding to the second optical signal G2, ${I}_{out 3} = \frac{1}{3} \left[{I}_{DC}+A⋅cos\left[2πγτt+φ\left(t, τ\right)-\frac{2 π}{3}\right]\right]$ represents a third output signal corresponding to the third optical signal G3, *I_{DC}* represents a direct current signal, and A represents a coefficient of the alternating current signal.

As described above, a structure of the 3×3 coupler may be used to implement a relationship between phase differences and splitting ratios of the three output optical signals, as shown in Formula (13) and Formula (14).

In this case, the first phase difference between the first output signal C1 and the second output signal C2, the second phase difference between the second output signal C2 and the third output signal C3, and the third phase difference between the first output signal C1 and the third output signal C3 are equal to each other and equal to the preset 2π/3.

In a possible implementation, the first phase difference, the second phase difference, and the third phase difference may alternatively be preset to another value greater than or equal to 30 degrees and less than or equal to 150 degrees, and the first phase difference, the second phase difference, and the third phase difference may be equal to or different from each other. This is not limited in this embodiment of this application.

In a possible implementation, the at least three signals include the first output signal C1, the second output signal C2, and the third output signal C3; and the at least three signals may be output to the processor 103, and the processor 103 performs analysis processing to obtain a detection result. That the detection result is obtained based on the at least three output signal includes: processing the at least three output signals to remove a direct current signal from each output signal to obtain at least three processed output signals, and performing quadrature demodulation on the at least three processed output signals to obtain the detection result.

The at least three output signals are processed to remove the direct current signal in each output signal, so that the three processed output signals whose impact of a common mode non-beat-frequency term noise in the output signal is removed can be obtained, so that the finally obtained detection result is not interfered by the common mode non-beat-frequency term noise.

With reference to Formula (15) to Formula (17), the following describes, in an ideal case, a principle of removing a direct current signal from each output signal and performing quadrature demodulation on the at least three signals to obtain the detection result when the at least three signals include the first output signal C1, the second output signal C2, and the third output signal C3. First, impact of the direct current signals in the first output signal C1, the second output signal C2, and the third output signal C3 and a common mode non-beat-frequency term noise caused by relative intensity noise and an optical amplification intensity noise is eliminated. An example manner of removing the direct current signal is: when a sum of the alternating current signals in the three output signals C1 to C3 is always equal to 0, the direct current signal may be removed by using the processor 103 in a manner shown in Formula (15): ${I}_{k} = {I}_{out , k} - \frac{{I}_{out 1} + {I}_{out 2} + {I}_{out 3}}{3}$ (15)

Herein, 0<k≤3, and k is a positive integer. After the direct current signal is removed, the three processed output signals *I*₁*, I*₂*,* and *I*₃ are obtained respectively. The processor 103 may perform quadrature demodulation on the processed output signals *I*₁*, I*₂*,* and *I*₃, to obtain an in-phase component *Iᵢₙ₋ₚₕₐₛₑ* and a quadrature component *I_{quadrature}* of a quadrature demodulation result. The detection result may be further obtained based on the quadrature demodulation result. A manner of obtaining the in-phase component and the quadrature component through quadrature demodulation may be, for example, shown in Formula (16) and Formula (17): ${I}_{in - phase} = \frac{{I}_{1} + {I}_{2} + {I}_{3}}{2} = \frac{1}{3} A ⋅ cos \left[2πγτt+φ\left(t, τ\right)\right]$ (16) ${I}_{quadrature} = \frac{{I}_{2} - {I}_{3}}{\sqrt{3}} = \frac{1}{3} A ⋅ sin \left[2πγτt+φ\left(t, τ\right)\right]$ (17)

The quadrature demodulation result is *A_{U} cos*[2*πγτt + φ*(*t,* τ)] *+ j* · *A_{U} sin*[2*πγτt + φ*(*t, τ*)] by setting $\frac{1}{3} A = {A}_{U}$*.*

During actual application, the 3×3 coupler 1021 may not be symmetrical, that is, the splitting ratio (the power ratio of each output signal) and the phase difference of the 3×3 coupler 1021 may not be accurately fixed to 1:1:1 and 2π/3. For example, as described above, the first phase difference, the second phase difference, and the third phase difference may be greater than or equal to 30 degrees and less than or equal to 150 degrees. An example implementation of performing quadrature demodulation based on the asymmetric 3×3 coupler may be implemented with reference to Formula (18) to Formula (31), so as to improve precision, reduce an error, reduce a precision limitation of the coupler, and further reduce costs of the coupler. By calibrating the splitting ratio and the phase difference, the quadrature demodulation result with high accuracy is obtained.

In a possible implementation, the direct current signals in the three output signals of the coupler may be calculated based on a ratio of the direct current signal to an ideal direct current signal (for example, *a*₁*, a*₂*,* and *a*₃ in the following) of the three output signals of the coupler, a ratio of the alternating current signal to an ideal alternating current signal (for example, *b*₁*, b*₂*,* and *b*₃ in the following), and a difference between the phase difference and an ideal phase difference (2π/3) (for example, *δ*₂, *δ*₃, and *δ*₂ + *δ*₃ in the following), and the direct current signal is removed.

For example, it is assumed that a signal output by the asymmetric 3×3 coupler is detected by the photoelectric detectors PD1 to PD3, and characteristics of the three output signals obtained after sampling and quantization are shown in Formula (18): $\left[\begin{matrix}{I}_{out 1} \\ {I}_{out 2} \\ {I}_{out 3}\end{matrix}\right] = \frac{1}{3} \left[\begin{matrix}{a}_{1} ⋅ {I}_{DC} + {b}_{1} ⋅ A ⋅ cos \left[2πγτt+φ\left(t, τ\right)\right] \\ {a}_{2} ⋅ {I}_{DC} + {b}_{2} ⋅ A ⋅ cos \left[2πγτt+φ\left(t, τ\right)+\frac{2 π}{3}+{δ}_{2}\right] \\ {a}_{3} ⋅ {I}_{DC} + {b}_{3} ⋅ A ⋅ cos \left[2πγτt+φ\left(t, τ\right)-\frac{2 π}{3}-{δ}_{3}\right]\end{matrix}\right]$ (18)

Herein, *a*₁*, a*₂*,* and *a*₃ are ratios of actual direct current signals to the ideal direct current signal *I_{DC}*; *b*₁*, b*₂*, b*₃ are ratios of actual alternating current signals to the ideal alternating current signal; and actual phase differences may be represented by $\frac{2 π}{3} + {δ}_{2} , \frac{2 π}{3} + {δ}_{3}$, and $\frac{2 π}{3} - {δ}_{2} - {δ}_{3}$. The phase difference satisfies 30° ≤ $\frac{2 π}{3} + {δ}_{2} \leq 150 ° , 30 ° \leq \frac{2 π}{3} + {δ}_{3} \leq 150 °$, and $30 ° \leq \frac{2 π}{3} - \left({δ}_{2}+{δ}_{3}\right) \leq 150 °$. *δ*₂, *δ*₃, and δ₂ + *δ*₃ are differences between the actual phase differences and the ideal phase difference. These parameters can be obtained by pre-calibrating the 3×3 coupler.

For example, direct current signals in the three output signals C1 to C3 may be separately removed based on the three output signals C1 to C3, to obtain the three processed output signals. The following provides an example implementation of removing a direct current signal with reference to Formula (19) to Formula (27).

Because the ratios *b*₁*, b*₂, and *b*₃ of the actual alternating current signals to the ideal alternating current signal may not be accurately ensured to be 1, and the differences *δ*₂, *δ*₃, and *δ*₂ + *δ*₃ between the actual phase differences and the ideal phase difference may not be accurately ensured to be 0, the sum of the alternating current signals of the three output signals C1 to C3 may not be always equal to 0. The sum (D) of the three output signals C1 to C3 may be represented, for example, by using Formula (19): $D = \frac{1}{3} \left\{\left({a}_{1}+{a}_{2}+{a}_{3}\right)⋅{I}_{DC}+{W}_{1}cos\left[ξ\left(t\right)-{Δ}_{1}\right]\right\}$ (19)

In Formula (19), *ξ*(*t*) and Δ₁ are used to describe a phase change of an error term, *ξ*(*t*) = 2πγτ*t*, and Δ₁ is a constant error term. $\frac{1}{3} {W}_{1} cos \left[ξ\left(t\right)-{Δ}_{1}\right]$ represents the sum of the alternating current signals of the three output signals C1 to C3, and $\frac{1}{3} {W}_{1} cos \left[ξ\left(t\right)-{Δ}_{1}\right]$ represents a coefficient of the sum of the alternating current signals of the three output signals C1 to C3. Therefore, to enable the sum of the alternating current signals of the three output signals C1 to C3 to be always equal to 0, that *W*₁ is equal to 0 may be enabled.

In a possible implementation, *W*₁ may be represented by using Formula (20) to Formula (22): ${W}_{1} = A ⋅ \sqrt{{U}_{1}^{2} + {V}_{1}^{2}}$ (20) ${U}_{1} = {b}_{1} - \frac{1}{2} \left({b}_{2} cos {δ}_{2}+{b}_{3} cos {δ}_{3}\right) - \frac{\sqrt{3}}{2} \left({b}_{2} sin {δ}_{2}+{b}_{3} sin {δ}_{3}\right)$ (21) ${V}_{1} = - \frac{\sqrt{3}}{2} \left({b}_{2} cos {δ}_{2}-{b}_{3} cos {δ}_{3}\right) + \frac{1}{2} \left({b}_{2} sin {δ}_{2}-{b}_{3} sin {δ}_{3}\right)$ (22)

To satisfy that *W*₁ is equal to 0, in an ideal case, between each of *b*₁*, b*₂*,* and *b*₃ and each of *δ*₂ and *δ*₃ may satisfy relationships shown in Formula (23) and Formula (24): $\frac{{b}_{2}}{{b}_{1}} = {k}_{2} = \frac{\sqrt{3} {cosδ}_{3} - {sinδ}_{3}}{\sqrt{3} cos \left({δ}_{2}+{δ}_{3}\right) + sin \left({δ}_{2}+{δ}_{3}\right)}$ (23) $\frac{{b}_{3}}{{b}_{1}} = {k}_{3} = \frac{\sqrt{3} {cosδ}_{2} - {sinδ}_{2}}{\sqrt{3} cos \left({δ}_{2}+{δ}_{3}\right) + sin \left({δ}_{2}+{δ}_{3}\right)}$ (24)

In fact, the relationships are difficult to implement, that is, $\frac{{b}_{2}}{{b}_{1}} \neq \frac{\sqrt{3} {cosδ}_{3} - {sinδ}_{3}}{\sqrt{3} cos \left({δ}_{2}+{δ}_{3}\right) + sin \left({δ}_{2}+{δ}_{3}\right)}$, and $\frac{{b}_{3}}{{b}_{1}} \neq \frac{\sqrt{3} {cosδ}_{2} - {sinδ}_{2}}{\sqrt{3} cos \left({δ}_{2}+{δ}_{3}\right) + sin \left({δ}_{2}+{δ}_{3}\right)}$ . Therefore, coefficients *q*₂ and *q*₃ of the second output signal C2 and the third output signal C3 may be set to adjust amplitudes of the three output signals C1 to C3. In this way, the sum (D) of the three output signals C1 to C3 may be obtained by using Formula (25): $D = {I}_{out 1} + {q}_{2} {I}_{out 2} + {q}_{3} {I}_{out 3} = \frac{1}{3} \left({a}_{1}+{q}_{2}{a}_{2}+{q}_{3}{a}_{3}\right) {I}_{DC}$ (25)

Herein, the coefficients *q*₂ and *q*₃ may be represented by using Formula (26) and Formula (27): ${q}_{2} = {k}_{2} ⋅ \frac{{b}_{1}}{{b}_{2}} = \frac{{b}_{1}}{{b}_{2}} ⋅ \frac{\sqrt{3} {cosδ}_{3} - {sinδ}_{3}}{\sqrt{3} cos \left({δ}_{2}+{δ}_{3}\right) + sin \left({δ}_{2}+{δ}_{3}\right)}$ (26) ${q}_{3} = {k}_{3} ⋅ \frac{{b}_{1}}{{b}_{3}} = \frac{{b}_{1}}{{b}_{3}} ⋅ \frac{\sqrt{3} {cosδ}_{2} - {sinδ}_{2}}{\sqrt{3} cos \left({δ}_{2}+{δ}_{3}\right) + sin \left({δ}_{2}+{δ}_{3}\right)}$ (27)

The processor 103 may obtain D by calculating *I*_{*out*1} *+ q*₂*I*_{*out*2} + *q*₃*I*_{*out*3}, and then may obtain *I_{DC}* by calculating based on Formula (25), and may obtain the direct current signal of each output signal by calculating by multiplying the coefficients *a*₁, *a*₂*,* and *a*₃ of the direct current signals of the output signals in Formula (18). A corresponding direct current signal is subtracted from each output signal, to obtain a processed output signal obtained after the direct current signal is removed. Quadrature demodulation is performed on the processed output signal based on Formula (28) to Formula (30).

Because *b*₁*, b*₂*,* and *b*₃ are known, the output signals obtained after the direct current signals are removed may be divided by *b*₁*, b*₂*,* and *b*₃ respectively, to eliminate *b*₁*, b*₂*,* and *b*₃ in the alternating current part in Formula (18), to obtain Formula (28): $\left[\begin{matrix}{I}_{out 1} \\ {I}_{out 2} \\ {I}_{out 3}\end{matrix}\right] = \frac{1}{3} \left[\begin{matrix}A ⋅ cos \left(2πγτt+φ\left(t, τ\right)\right) \\ A ⋅ cos \left(2πγτt+φ\left(t, τ\right)+\frac{2 π}{3}+{δ}_{2}\right) \\ A ⋅ cos \left(2πγτt+φ\left(t, τ\right)-\frac{2 π}{3}-{δ}_{3}\right)\end{matrix}\right]$ (28)

Formula (29) and Formula (30) may be obtained based on Formula (28): ${I}_{out 2} = \frac{1}{3} A ⋅ \left[cos\left(2πγτt+φ\left(t, τ\right)\right)cos\left(\frac{2 π}{3}+{δ}_{2}\right)-sin\left(2πγτt+φ\left(t, τ\right)\right)sin\left(\frac{2 π}{3}+{δ}_{2}\right)\right]$ (29) ${I}_{out 3} = \frac{1}{3} A ⋅ \left[cos\left(2πγτt+φ\left(t, τ\right)\right)cos\left(\frac{2 π}{3}+{δ}_{3}\right)+sin\left(2πγτt+φ\left(t, τ\right)\right)sin\left(\frac{2 π}{3}+{δ}_{3}\right)\right]$ (30)

Because *δ*₂ and *δ*₃ are also known, cos(2*πγτt* + *φ*(*t, τ*)) may be eliminated through calculation based on *I*_{*out*2} and *I*_{*out*3}, to obtain the quadrature component. sin(2*πγτt* + *φ*(*t, τ*)) may be eliminated through calculation based on *I*_{*out*1}, *I*_{*out*2}, and *I*_{*out*3}, to obtain the in-phase component. The quadrature demodulation result in a form of a complex signal may be obtained based on the in-phase component and the quadrature component.

In a possible implementation, the coupler 102 may alternatively include a 4×4 coupler. The 4×4 coupler has four output ends and can output four output signals. A transfer matrix parameter of the coupler and a quadrature demodulation solution of the processor may be preset based on a type of the coupler, so that quadrature demodulation can also be completed based on the 4×4 coupler and the processor. A specific manner of selecting a type of the coupler is not limited in this embodiment of this application.

In a possible implementation, when the local oscillation signal includes a positive sideband signal and a negative sideband signal, and the second signal E2 includes only a signal reflected by a to-be-measured target, the second signal E2 also includes a positive sideband signal and a negative sideband signal. According to the foregoing method, the single-sideband signal in Formula (15) to Formula (30) is replaced with the double-sideband signal, that is, the quadrature demodulation result for the double-sideband signal may be obtained, as shown in Formula (31): $\begin{matrix}I = {I}_{USB} + {I}_{LSB} \\ = {A}_{U} cos \left[2πγτt+φ\left(t, τ\right)\right] + {A}_{L} cos \left[-2πγτt+φ\left(t, τ\right)\right] + j ⋅ {A}_{U} sin \left[2πγτt+φ\left(t, τ\right)\right] \\ + j ⋅ {A}_{L} sin \left[-2πγτt+φ\left(t, τ\right)\right]\end{matrix}$ (31)

Herein, *A_{U} cos*[2*πγτt + φ*(*t,* τ)] *+ j · A_{U} sin*[2*πγτt + φ*(*t,* τ)] represents the beat-frequency signal of the positive sideband in the quadrature demodulation result, and *A_{L} cos*[*-*2*πγτt + φ*(*t, τ*)] *+ j · A_{L} sin*[-2*π*γ*τt* + *φ*(*t, τ*)] represents the beat-frequency signal of the negative sideband in the quadrature demodulation result. It can be seen that the laser phase noise *φ*(*t,* τ) belongs to a common mode noise for the beat-frequency signal of the positive sideband and the beat-frequency signal of the negative sideband, and a phase 2*πγτt + φ*(*t,* τ) of the beat-frequency signal of the positive sideband and a phase *-*2*πγτt* + *φ*(*t, τ*) of the beat-frequency signal of the negative sideband belong to differential mode components. When there is a difference (for example, the foregoing *δ*₂, *δ*₃, and *δ*₂ + δ₃) between phase differences of the three output signals of the coupler and the ideal phase difference (2π/3), values of A_{U} and A_{L} may be affected by the difference (for example, the items $cos \left(\frac{2 π}{2}+{δ}_{3}\right)$) and $sin \left(\frac{2 π}{2}+{δ}_{3}\right)$) in Formula (29) and Formula (30)). The following is described. In this embodiment of this application, the detection result may be obtained based on delay information or frequency information of an autocorrelation result, and the values of A_{U} and A_{L} do not affect the detection result. Therefore, the detection result may not be affected by an undesirable phase difference of the output signal of the coupler.

In a possible implementation, autocorrelation operation may be performed on the quadrature demodulation result, as shown in Formula (32): $S = I ⋅ {I}^{∗} = 2 A + 2 A ⋅ cos \left(2⋅2πγτ⋅t\right)$ (32)

Herein, *I** represents a conjugate complex signal of the quadrature demodulation result *I,* and *S* may represent the autocorrelation result of the quadrature demodulation result *I.* It can be learned from Formula (32) that, after autocorrelation processing is performed on the quadrature demodulation result, the laser phase noise *φ*(*t, τ*) is completely removed. Further, distance information obtained by performing analysis processing based on the autocorrelation result S is distance information with relatively high accuracy that is not interfered by the laser phase noise.

In a possible implementation, when the local oscillation signal includes a positive sideband signal and a negative sideband signal, and the second signal E2 includes signals reflected by a plurality of to-be-measured targets, the second signal E2 may also include a plurality of positive sideband signals and a plurality of negative sideband signals, so that the first output signal C1, the second output signal C2, and the third output signal C3 each include a plurality of positive sideband signals and a plurality of negative sideband signals. Based on this, the performing quadrature demodulation on the at least three processed output signals to obtain the detection result further includes: performing quadrature demodulation on the at least three processed output signals to obtain the plurality of positive sideband signals and the plurality of negative sideband signals.

For example, the quadrature demodulation result obtained by performing quadrature demodulation on the at least three processed output signals may include, for example, the plurality of positive sideband signals and the plurality of negative sideband signals. The plurality of positive sideband signals may respectively correspond to a plurality of different positive frequencies, and the plurality of negative sideband signals may respectively correspond to a plurality of different negative frequencies. Any positive sideband signal may have a corresponding negative sideband signal (referred to as a group of positive and negative sideband signals for short), and a positive frequency and a negative frequency of the positive sideband signal and the negative sideband signal may have a same absolute value. In this case, the positive sideband signal and the negative sideband signal may be used to calculate information of a same to-be-measured target.

The processor 103 in the detection apparatus in this embodiment of this application may distinguish, in the following manner, a plurality of groups of positive and negative sideband signals that may exist in the quadrature demodulation result. The following are included: performing autocorrelation operation on a signal obtained by adding any positive sideband signal and any negative sideband signal, to obtain a plurality of autocorrelation operation results; and determining, in the plurality of autocorrelation operation results, a positive sideband signal and a negative sideband signal that correspond to an autocorrelation operation result in which a peak sidelobe ratio exceeds a threshold as a positive sideband signal and a negative sideband signal corresponding to a same target.

In this manner, one negative sideband signal corresponding to the same target may be found in the plurality of negative sideband signals for any positive sideband signal, so that the plurality of positive sideband signals and the plurality of negative sideband signals that are obtained through quadrature demodulation may correspond to a plurality of targets, thereby effectively improving reliability and accuracy of multi-target ambiguity resolution, and improving a processing capability of the detection apparatus.

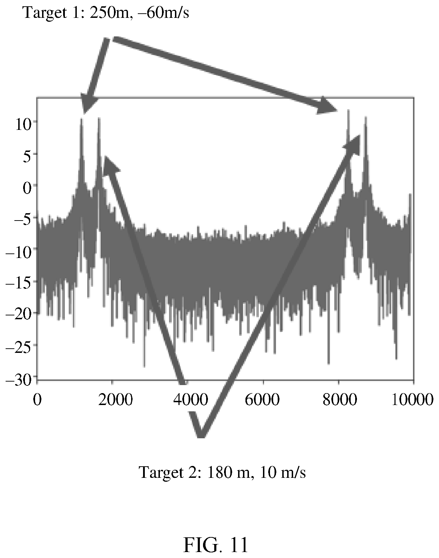

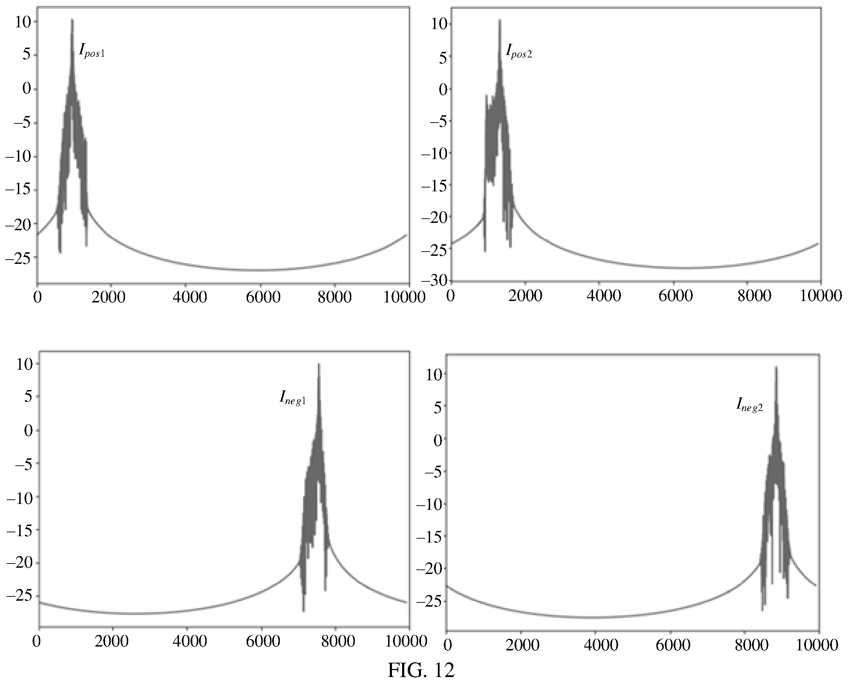

For example, when two to-be-measured targets exist in detection once, the quadrature demodulation result may include two positive sideband signals and two negative sideband signals. A complex spectrum of the quadrature demodulation result is shown in FIG. 11, and four target peaks are presented. The two target peaks are in negative frequency parts (two peak values on the left side in FIG. 11), and the two target peaks are in positive frequency parts (two peak values on the right side in FIG. 11). One positive frequency target peak and one negative frequency target peak include information of one to-be-measured target, for example, a distance of the to-be-measured target is 250 m, and a speed is -60 m/s. The remaining positive frequency target peak and the remaining negative frequency target peak include information of another to-be-measured target. For example, a distance of the to-be-measured target is 180 m, and a speed is 10 m/s. The positive sideband signal and the negative sideband signal may be separated one by one by using a digital band-pass filter, and are denoted as a first negative sideband signal *I*_{*pos*1}, a second negative sideband signal *I*_{*pos*2}, a first positive sideband signal *I*_{*neg*1}, and a second positive sideband signal *I*_{*neg*2}, as shown in FIG. 12.

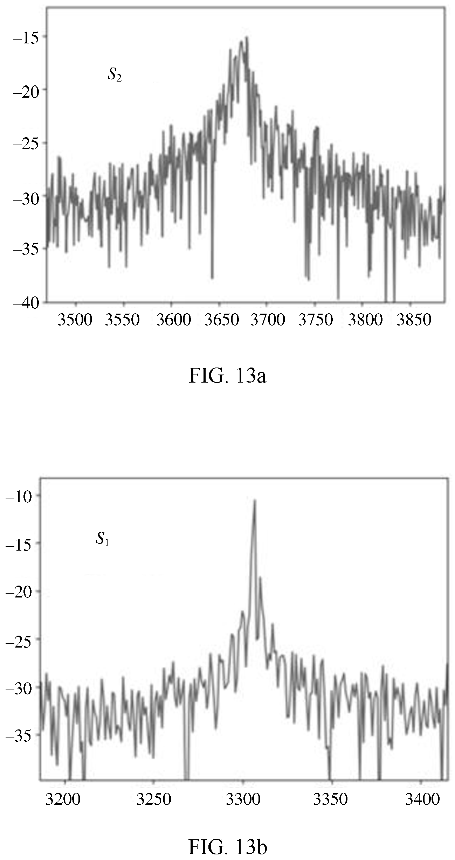

Next, any positive sideband signal (for example, the first positive sideband signal *I*_{*neg*1}) is selected, and is added to each negative sideband signal (the first negative sideband signal *I*_{*pos*1} and the second negative sideband signal *I*_{*pos*2}), and autocorrelation operation is performed on each addition result, to obtain autocorrelation results *S*₁ = (*I*_{*pos*1} *+ I*_{*neg*1})(*I*_{*pos*1} *+ I*_{*neg*1})^{∗} and *S*₂ = (*I*_{*pos*2} *+ I*_{*neg*1})(*I*_{*pos*2} *+ I*_{*neg*1})*. Due to limitation of the laser phase noise and measurement time, a distance measurement result will present a multi-peak structure, as shown in FIG. 13a and FIG. 13b. It may be considered that a larger peak sidelobe ratio in the distance measurement result, as shown in FIG. 13b, indicates a smaller laser phase noise residual, and a higher probability of matching the positive sideband signal and the negative sideband signal on which autocorrelation operation is performed. Therefore, in this application, a peak sidelobe ratio is used as an evaluation amount, and autocorrelation operation is performed on a combination of each positive sideband signal and each negative sideband signal, to obtain a positive sideband signal and a negative sideband signal corresponding to a same target. The threshold may be selected as required.

In this manner, a plurality of targets are distinguished, so that reliability and accuracy of multi-target ambiguity resolution can be effectively improved, and misjudgment is prevented.

When the positive sideband signal and the negative sideband signal corresponding to the same target are determined, the autocorrelation result of the positive sideband signal and the negative sideband signal has been obtained, and the autocorrelation result includes related information of the target from which the laser phase noise is removed. Therefore, the detection result may be obtained based on the autocorrelation result.

In this manner, the laser phase noise is completely eliminated. In addition, an environmental interference noise generated by target surface interference is also a common mode noise. Therefore, in this embodiment of this application, theoretically, the environmental interference noise generated by the target surface interference is also suppressed. According to the detection apparatus in this embodiment of this application, the common-mode noise is completely suppressed, distance measurement performance is greatly improved, and a laser with a short coherence length can be used to implement long-distance measurement and maintain good distance measurement precision.

In a possible implementation, the detection result includes distance information of a to-be-measured target, and the performing quadrature demodulation on the at least three processed output signals to obtain the detection result includes: determining distance information of the same target based on the autocorrelation operation result of a signal obtained by adding the positive sideband signal and the negative sideband signal corresponding to the same target. The positive sideband signal and the negative sideband signal are obtained through quadrature demodulation.

A form of the autocorrelation operation result may be shown in Formula (32), and a delay τ may be obtained through calculation based on S. Because frequency information of the local oscillation signal is the same as that of the first signal, the delay τ is time from transmitting the first signal to receiving the second signal. Therefore, 1/2τ is time from transmitting the first signal to reaching the to-be-measured target. A distance between the detection apparatus and the to-be-measured target may be calculated by multiplying 1/2τ by a speed of light, so as to obtain the distance information of the to-be-measured target.

In this manner, the distance information of the target may be obtained. In addition, there is no phase noise in the autocorrelation operation result of the signal obtained by adding the positive sideband signal and the negative sideband signal corresponding to the same target, so that the distance information of the target is not interfered by the phase noise, and accuracy of the distance information is ensured. Further, a stereomodel model of an environment may be constructed based on the distance information, spatial location information of the target is determined, and three-dimensional point cloud data including the spatial location information of the target is output to a terminal, for example, a vehicle or an unmanned aerial vehicle, on which the detection apparatus is installed. In this way, the terminal can implement functions such as travel path planning and obstacle avoidance based on the obtained three-dimensional point cloud data.

In a possible implementation, the detection result includes a moving speed of the to-be-measured target, and the performing quadrature demodulation on the at least three processed output signals to obtain the detection result includes: determining a moving speed of the same target based on a difference between center frequencies of the positive sideband signal and the negative sideband signal corresponding to the same target. The positive sideband signal and the negative sideband signal are obtained through quadrature demodulation.

For example, after the positive sideband signal and the negative sideband signal corresponding to the same target are determined, the center frequency (positive frequency) of the positive sideband signal and the center frequency (negative frequency) of the negative sideband signal may be obtained respectively, and the difference between the two may be obtained through calculation. A half of the difference is the moving speed of the target.

In this manner, speed information of the target may be obtained. In addition, there is no phase noise in the autocorrelation operation result of the signal obtained by adding the positive sideband signal and the negative sideband signal corresponding to the same target, so that the speed information of the target is not interfered by the phase noise, and accuracy of the speed information is ensured. Four-dimensional point cloud data may be synthesized with reference to the moving speed of the target and the three-dimensional point cloud data obtained based on the distance information, and a moving speed and location information of the target at each moment are determined by using the four-dimensional point cloud data. In this way, a radar system can implement real-time monitoring of target location information. In addition, when the moving speed and the location information of the target change regularly, a possible location of the target at a next moment may be pre-determined, so that the terminal can adjust a response manner at the next moment based on the pre-determined location information, thereby improving performance such as a response speed of the terminal.

An embodiment of this application provides a radar, configured to provide a target detection function for a terminal. The radar includes at least one detection apparatus mentioned in the foregoing embodiments of this application. The at least one detection apparatus in the radar may be integrated into an entire system or device, or the at least one detection apparatus in the radar may be independently disposed as an element or apparatus. The radar according to the embodiment of this application can reduce hardware costs of the radar, and there is no need to set a compensation branch, to simplify hardware complexity of a radar system and reduce a system size. This can be easily applied to an actual scenario.

An embodiment of this application provides a terminal, including the radar in embodiments of this application.

The terminal may be, for example, a vehicle or another intelligent terminal that has a target detection function. The intelligent terminal may be another terminal device such as an intelligent transportation device, a smart home device, or a robot. The terminal may be, for example, a terminal device that has a target detection function, such as an unmanned aerial vehicle. The terminal according to this embodiment of this application can reduce hardware costs required for completing target detection while ensuring relatively high accuracy of target detection.

Further embodiments of the present invention are provided in the following. It should be noted that the numbering used in the following section does not necessarily need to comply with the numbering used in the previous sections.

Embodiment 1. A detection apparatus, wherein the apparatus comprises:
a transceiver, configured to transmit a first signal, wherein the first signal comprises a double-sideband signal, and configured to receive a second signal, wherein the second signal is a reflected signal corresponding to the first signal;
a coupler, configured to: receive a local oscillation signal and the second signal, and output at least three output signals, wherein the local oscillation signal and the first signal are obtained by splitting a third signal from a modulator; and
a processor, configured to obtain a detection result based on the at least three output signals.

Embodiment 2. The detection apparatus according to Embodiment 1, wherein the coupler comprises an optical fiber coupler having at least three input ends and at least three output ends, and two of the at least three input ends are configured to receive the local oscillation signal and the second signal.

Embodiment 3. The detection apparatus according to Embodiment 1 or 2, wherein the at least three output signals comprise a first output signal, a second output signal, and a third output signal; a phase difference between the first output signal and the second output signal is a first phase difference, a phase difference between the second output signal and the third output signal is a second phase difference, and a phase difference between the first output signal and the third output signal is a third phase difference; and the first phase difference, the second phase difference, and the third phase difference are greater than or equal to 30 degrees and less than or equal to 150 degrees.

Embodiment 4. The detection apparatus according to any one of Embodiments 1 to 3, wherein the obtaining a detection result based on to the at least three output signals comprises:
processing the at least three output signals to remove a direct current signal from each output signal, to obtain at least three processed output signals; and
performing quadrature demodulation on the at least three processed output signals to obtain the detection result.

Embodiment 5. The detection apparatus according to Embodiment 4, wherein the detection result comprises distance information of a to-be-measured target; and
the performing quadrature demodulation on the at least three processed output signals to obtain the detection result comprises:
determining distance information of a same target based on an autocorrelation operation result of a signal obtained by adding a positive sideband signal and a negative sideband signal corresponding to the same target, wherein the positive sideband signal and the negative sideband signal are obtained through quadrature demodulation.

Embodiment 6. The detection apparatus according to Embodiment 4, wherein the detection result comprises a moving speed of a to-be-measured target; and
the performing quadrature demodulation on the at least three processed output signals to obtain the detection result comprises:
determining a moving speed of a same target based on a difference between center frequencies of a positive sideband signal and a negative sideband signal corresponding to the same target, wherein the positive sideband signal and the negative sideband signal are obtained through quadrature demodulation.

Embodiment 7. The detection apparatus according to Embodiment 5 or 6, wherein the performing quadrature demodulation on the at least three processed output signals to obtain the detection result further comprises:
performing quadrature demodulation on the at least three processed output signals to obtain a plurality of positive sideband signals and a plurality of negative sideband signals;
performing autocorrelation operation on a signal obtained by adding any positive sideband signal and any negative sideband signal, to obtain a plurality of autocorrelation operation results; and
determining, in the plurality of autocorrelation operation results, a positive sideband signal and a negative sideband signal corresponding to an autocorrelation operation result whose peak sidelobe ratio exceeds a threshold as the positive sideband signal and the negative sideband signal corresponding to the same target.

Embodiment 8. The detection apparatus according to any one of Embodiments 1 to 7, wherein the transceiver comprises:
an optical coupling unit, configured to: output, to a space scanning unit by using a preset first path, the first signal obtained by splitting, and output, to the coupler by using a preset second path, the second signal from the space scanning unit, wherein the first path is different from the second path; and
the space scanning unit, configured to: transmit the first signal from the optical coupling unit at a plurality of preset angles, and receive the second signal and output the second signal to the optical coupling unit.

Embodiment 9. The detection apparatus according to Embodiment 8, wherein the optical coupling unit comprises:
an optical collimator, configured to: perform collimation processing on the first signal obtained by splitting, and output the first signal to an optical fiber circulator; and
the optical fiber circulator, configured to: control a beam path of the collimated first signal, output the collimated first signal to the space scanning unit by using the preset first path, control a beam path of the second signal from the space scanning unit, and output the second signal to the coupler by using the preset second path.

Embodiment 10. The detection apparatus according to any one of Embodiments 1 to 9, wherein the transceiver further comprises:
an optical power amplification unit, configured to: perform power amplification on the first signal obtained by splitting, and output an amplified first signal to the optical coupling unit.

Embodiment 11. The detection apparatus according to any one of Embodiments 1 to 10, wherein the apparatus further comprises:
the modulator, configured to: receive a modulation signal, and modulate a fourth signal from a laser based on the modulation signal, to obtain the third signal.

Embodiment 12. A radar, comprising the detection apparatus according to any one of Embodiments 1 to 11.

Embodiment 13. A terminal, comprising the radar according to Embodiment 12.

The flowcharts and block diagrams in the accompanying drawings show the system architectures, functions, and operations that may be implemented by apparatuses, systems, methods, and computer program products according to various embodiments of this application. In this regard, each block in the flowcharts or block diagrams may represent a module, a program segment, or a part of an instruction, and the module, the program segment, or the part of the instruction includes one or more executable instructions for implementing a specified logical function. In some alternative implementations, functions marked in the blocks may also occur in a sequence different from that marked in the accompanying drawings. For example, two consecutive blocks may be actually executed substantially in parallel, or sometimes may be executed in a reverse order, depending on a function involved.

It should also be noted that each block in the block diagram and/or the flowchart, and a combination of blocks in the block diagram and/or the flowchart may be implemented by hardware (for example, a circuit or an ASIC (Application-Specific Integrated Circuit, application-specific integrated circuit)) that performs a corresponding function or an action, or may be implemented by a combination of hardware and software, for example, firmware.

Although the present invention is described herein with reference to the embodiments, in a process of implementing the present invention that seeks protection, a person skilled in the art may understand and implement other variations of the disclosed embodiments by viewing the accompanying drawings, disclosed content, and the appended claims. In the claims, the word "comprising" (comprising) does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce a good effect.

The foregoing has described the embodiments of this application. The foregoing descriptions are examples, are not exhaustive, and are not limited to the disclosed embodiments. A plurality of modifications and variations are apparent to a person of ordinary skill in the art without departing from the scope of the described embodiments. Selection of terms used in this specification is intended to best explain the principles of the embodiments, actual application, or improvements to technologies in the market, or to enable another person of ordinary skill in the art to understand the embodiments disclosed in this specification.

## Claims

1. A detection apparatus, wherein the apparatus comprises:
a transceiver (101), configured to transmit a first signal (E1), wherein the first signal comprises a double-sideband signal, and configured to receive a second signal (E2), wherein the second signal is a reflected signal corresponding to the first signal;
a coupler (102), configured to: receive a local oscillation signal (ELO) and the second signal, and output at least three output signals, wherein the local oscillation signal and the first signal are obtained by splitting a third signal (E3) from a modulator (104); and
a processor (103), configured to obtain a detection result based on the at least three output signals;
**characterized in that**:.
the transceiver comprises an optical coupling unit (1012), configured to: output, to a space scanning unit (1013) by using a preset first path, the first signal (E1) obtained by splitting, and output, to the coupler (102) by using a preset second path, the second signal (E2) from the space scanning unit, wherein the first path is different from the second path.

2. The detection apparatus according to claim 1, wherein the at least three output signals comprise a first output signal, a second output signal, and a third output signal; a phase difference between the first output signal and the second output signal is a first phase difference, a phase difference between the second output signal and the third output signal is a second phase difference, and a phase difference between the first output signal and the third output signal is a third phase difference; and the first phase difference, the second phase difference, and the third phase difference are greater than or equal to 30 degrees and less than or equal to 150 degrees.

3. The detection apparatus according to any one of claims 1 to 2, wherein the obtaining a detection result based on to the at least three output signals comprises:
processing the at least three output signals to remove a direct current signal from each output signal, to obtain at least three processed output signals; and
performing quadrature demodulation on the at least three processed output signals to obtain the detection result.

4. The detection apparatus according to claim 3, wherein the detection result comprises distance information of a to-be-measured target; and
the performing quadrature demodulation on the at least three processed output signals to obtain the detection result comprises:
determining distance information of a same target based on an autocorrelation operation result of a signal obtained by adding a positive sideband signal and a negative sideband signal corresponding to the same target, wherein the positive sideband signal and the negative sideband signal are obtained through quadrature demodulation.

5. The detection apparatus according to claim 3, wherein the detection result comprises a moving speed of a to-be-measured target; and
the performing quadrature demodulation on the at least three processed output signals to obtain the detection result comprises:
determining a moving speed of a same target based on a difference between center frequencies of a positive sideband signal and a negative sideband signal corresponding to the same target, wherein the positive sideband signal and the negative sideband signal are obtained through quadrature demodulation.

6. The detection apparatus according to claim 4 or 5, wherein the performing quadrature demodulation on the at least three processed output signals to obtain the detection result further comprises:
performing quadrature demodulation on the at least three processed output signals to obtain a plurality of positive sideband signals and a plurality of negative sideband signals;
performing autocorrelation operation on a signal obtained by adding any positive sideband signal and any negative sideband signal, to obtain a plurality of autocorrelation operation results; and
determining, in the plurality of autocorrelation operation results, a positive sideband signal and a negative sideband signal corresponding to an autocorrelation operation result whose peak sidelobe ratio exceeds a threshold as the positive sideband signal and the negative sideband signal corresponding to the same target.

7. The detection apparatus according to any one of claims 1 to 6, wherein the transceiver (101) comprises:
the space scanning unit, configured to: transmit the first signal from the optical coupling unit at a plurality of preset angles, and receive the second signal and output the second signal to the optical coupling unit.

8. The detection apparatus according to claim 7, wherein the optical coupling unit (1012) comprises:
an optical collimator (c1), configured to: perform collimation processing on the first signal (E1) obtained by splitting, and output the first signal to an optical fiber circulator (c2); and
the optical fiber circulator, configured to: control a beam path of the collimated first signal, output the collimated first signal to the space scanning unit (1013) by using the preset first path, control a beam path of the second signal from the space scanning unit, and output the second signal to the coupler (102) by using the preset second path.

9. The detection apparatus according to any one of claims 1 to 8, wherein the transceiver (101) further comprises:
an optical power amplification unit (1011), configured to: perform power amplification on the first signal (E1) obtained by splitting, and output an amplified first signal to the optical coupling unit (1012).

10. The detection apparatus according to any one of claims 1 to 9, wherein the apparatus further comprises:
the modulator (104), configured to: receive a modulation signal, and modulate a fourth signal (E4) from a laser (105) based on the modulation signal, to obtain the third signal (E3).

11. A lidar, comprising the detection apparatus according to any one of claims 1 to 10.

12. A terminal, comprising the lidar according to claim 11.
